# EUROPEAN PATENT APPLICATION

(11) **EP 2 848 302 A1**
(43) Date of publication of application: **18.03.2015**
(21) Application number: 13787711.4
(22) Date of filing: 26.04.2013
(51) Int. Cl.: B01J 20/34, B01J 20/12, C11B 3/10

(54) **METHOD FOR PRODUCING RECLAIMED WHITE CLAY, RECLAIMED WHITE CLAY, AND METHOD FOR PRODUCING REFINED FAT**

(30) Priority: 10.05.2012 JP 2012108353
(71) Applicant: The Nisshin Oillio Group, Ltd., Chuo-ku Tokyo 104-8285 (JP)
(72) Inventor: TOKUNAGA, Kunihiko, Yokosuka-shi Kanagawa 239-0832 (JP); ITAGAKI, Hiroyuki, Yokosuka-shi Kanagawa 239-0832 (JP)
(74) Representative: Cabinet Laurent & Charras
(86) International application number: PCT/JP2013/062403
(87) International publication number: WO 2013/168608

(57) **Abstract**

A method for producing a reclaimed white clay which reclaims the decolorizing function of a waste white clay, the method including a pretreatment step of holding a waste white clay that has been used in refining an oil or fat, and a lower alcohol in a mixed state, and a reclamation step, wherein the reclamation step includes mixing an acidic catalyst into the mixture of the waste white clay and the lower alcohol obtained after the pretreatment step, and simultaneously performing an extraction of an oily component from the waste white clay, and an esterification reaction between the lower alcohol and at least one component selected from the group consisting of oils or fats and free fatty acids within the extracted oily component.

## Description

### TECHNICAL FIELD

The present invention relates to a method for producing a reclaimed white clay from a waste white clay that has been used in refining an oil or fat, and more specifically, relates to a method of simultaneously performing an extraction of an oily component from the waste white clay, and an esterification of the oils and fats and/or free fatty acids within this oily component with a lower alcohol, thereby converting the oily component within the waste white clay to an ester that can be used as a biofuel, while reclaiming the decolorizing function of the waste white clay.

Priority is claimed on Japanese Patent Application No. 2012-108353, filed May 10, 2012, the content of which is incorporated herein by reference.

### BACKGROUND ART

Oils and fats obtained from crude oils derived from animals or plants by removing impurities such as free fatty acids and heavy metals in a deacidification step are refined by removing colored substances such as chlorophyll and carotenoids in a decolorizing step. White clay is generally used in the decolorizing step, and the oil or fat is decolorized by adsorbing the colored substances inside the fine pores within the white clay. The amount used of the white clay varies depending on the oil raw material and the intended application for the refined oil, but is typically within a range from approximately 0.5 to several % by mass relative to the oil or fat, and therefore a large amount of waste white clay that has been used in oil and fat refining is generated every day.

This waste white clay that has been used in refining oils and fats typically contains 30 to 40% by mass of an adhered residual oily component relative to the total mass of the waste white clay. Most waste white clay is discarded as an industrial waste product, but because disposal is problematic when the white clay contains a large oily component, it is necessary to remove the oily component within the waste white clay by some method or other.

Conventionally, water boiling methods, pressurized steam methods and solvent extraction methods and the like have been investigated as methods for extracting the oily component from waste white clay (see Non-Patent Document 1), but completely removing the oily component that exists inside the fine pores of the waste white clay is difficult, and an effective treatment method is yet to be found. Furthermore, even following these treatments, the waste white clay tends to remain in a state containing several % by mass to several tens of % by mass of an adhered oily component relative to the total mass of the waste white clay, and as a result, the waste white clay is mainly disposed of by incineration or the like.

Further, methods of recycling the waste white clay following an oily component removal treatment have also been considered. For example, Patent Document 1 discloses, as a method of extracting an oily component from waste white clay, a method for producing a biofuel in which the oil or fat within the waste white clay is treated with an enzyme and decomposed into fatty acids, and the refined fatty acids are then converted to esters by reaction with a lower alcohol. Patent Document 1 also discloses that following extraction of the oily component, the waste white clay can be reused as a substitute for clay, in a similar manner to typical used clay minerals.

In addition, Patent Document 2 discloses a method of separating an oil component from an inorganic material, thereby regenerating the adsorption function of the inorganic material, by performing a pressurized heat treatment under conditions in which a lower alcohol adopts a supercritical state, and activated clay is mentioned as an example of the inorganic material.

### DOCUMENTS OF RELATED ART

### PATENT DOCUMENTS

Patent Document 1: Japanese Unexamined Patent Application, First Publication No. 2003-336082
Patent Document 2: Japanese Unexamined Patent Application, First Publication No. 2004-223426

### NON-PATENT DOCUMENT

Non-Patent Document 1: "Production Techniques for Edible Oils and Fats" (Shokuyou yushi seizou gijutsu), coauthored by Tetsuo Ono and Shizuyuki Oota, published by Business Center Co., Ltd., 1991.

### SUMMARY OF THE INVENTION

### PROBLEMS TO BE SOLVED BY THE INVENTION

As mentioned above, in the refining of oils and fats, waste white clay incorporating a large oily component is generated as a by-product, and although an effective method for treating this waste white clay is required, extraction and removal of the oily component from the waste white clay has proven difficult.

Further, the disposal of waste white clay also incurs considerable cost and has a significant impact on the environment, and therefore not only is it desirable to extract the oily component within the waste white clay, but a method for recycling the waste white clay following extraction of the oily component would also be desirable. From the viewpoint of the efficiency of the recycling, it is preferable that the waste white clay can be reused as white clay. However, because white clay is comparatively inexpensive, almost no investigation has been conducted into the recycling of waste white clay as white clay. In actual fact, in the method disclosed in Patent Document 1, because an enzyme treatment is used, only specific oily components among the large variety of components adhered to the waste white clay can be removed. As a result, extracting and removing the oily components sufficiently to enable the waste white clay to be reused as white clay is extremely difficult. On the other hand, in Patent Document 2, although a method is described for reclaiming waste white clay as white clay, because the method employs a high-temperature high-pressure supercritical reaction, a special apparatus is required for the reaction, controlling the process is difficult, and the method requires excessive cost.

The present invention has been developed in light of the above circumstances, and has an object of providing a simple method which enables simultaneous reclamation of the decolorizing function of a waste white clay, and production of recyclable compounds from the oily component within the waste white clay.

### MEANS TO SOLVE THE PROBLEMS

As a result of intensive research aimed at achieving the above object, the inventors of the present invention discovered that by mixing a waste white clay, a lower alcohol and an acidic catalyst, esters could be produced from the oily component within the waste white clay, while simultaneously reclaiming the decolorizing function of the waste white clay, and they were therefore able to complete the present invention.

In other words, the present invention provides a method for producing a reclaimed white clay, a reclaimed white clay, and a method for producing refined oil or fat, having the distinctive features described below.
(1) A method for producing a reclaimed white clay which reclaims the decolorizing function of a waste white clay, the method including a pretreatment step of holding a waste white clay that has been used in refining an oil or fat, and a lower alcohol in a mixed state, and a reclamation step, performed after the pretreatment step, of mixing an acidic catalyst into the mixture of the waste white clay and the lower alcohol, and simultaneously performing an extraction of an oily component from the waste white clay, and an esterification reaction between the lower alcohol and the oils or fats and/or free fatty acids within the oily component.
(2) The method for producing a reclaimed white clay according to (1) above,
   wherein in the pretreatment step, the time for which the mixture of the waste white clay and the lower alcohol is held is at least 3 minutes.
(3) The method for producing a reclaimed white clay according to (1) or (2) above, wherein the temperature of the mixture of the waste white clay and the lower alcohol at the completion of the pretreatment step is from 60 to 200°C.
(4) The method for producing a reclaimed white clay according to any one of (1) to (3) above, wherein in the reclamation step, the acidic catalyst is mixed into the mixture prepared in the pretreatment step with the lower alcohol in the mixture in a state of reflux, and the extraction of the oily component and the esterification reaction are performed with the lower alcohol in a state of reflux.
(5) The method for producing a reclaimed white clay according to any one of (1) to (4) above, wherein in the reclamation step, a treatment in which a portion of the liquid component within the mixture is substituted with a lower alcohol, or additional lower alcohol is added to the mixture, is performed either once or a plurality of times.
(6) The method for producing a reclaimed white clay according to any one of (1) to (5) above, further including, after the reclamation step, an extraction step of mixing the reclaimed white clay, collected by a solid-liquid separation treatment from the obtained mixture containing the reclaimed white clay, with a lower alcohol, and performing an additional extraction of an oily component from the reclaimed white clay.
(7) The method for producing a reclaimed white clay according to any one of (1) to (6) above, wherein in the pretreatment step, 50 to 900 parts by mass of the lower alcohol is mixed per 100 parts by mass of the waste white clay.
(8) A method for producing a reclaimed white clay which reclaims the decolorizing function of a waste white clay, the method including a reclamation step of mixing a waste white clay that has been used in refining an oil or fat, a lower alcohol and an acidic catalyst, and simultaneously performing an extraction of an oily component from the waste white clay, and an esterification reaction between the lower alcohol and the oils or fats and/or free fatty acids within the oily component, wherein in the reclamation step, a treatment in which a portion of the liquid component within the mixture is substituted with a lower alcohol, or additional lower alcohol is added to the mixture, is performed either once or a plurality of times.
(9) A method for producing a reclaimed white clay which reclaims the decolorizing function of a waste white clay, the method including a reclamation step of mixing a waste white clay that has been used in refining an oil or fat, a lower alcohol and an acidic catalyst, and simultaneously performing an extraction of an oily component from the waste white clay, and an esterification reaction between the lower alcohol and the oils or fats and/or free fatty acids within the oily component, and an extraction step, performed after the reclamation step, of mixing the reclaimed white clay, collected by a solid-liquid separation treatment from the obtained mixture containing the reclaimed white clay, with a lower alcohol, and performing an additional extraction of an oily component from the reclaimed white clay.
(10) The method for producing a reclaimed white clay according to (8) or (9) above, wherein in the reclamation step, 50 to 900 parts by mass of the lower alcohol is mixed per 100 parts by mass of the waste white clay.
(11) The method for producing a reclaimed white clay according to any one of (1) to (10) above, wherein in the reclamation step, the extraction of the oily component and the esterification reaction between the lower alcohol and the oils or fats and/or free fatty acids within the oily component are performed at a temperature of 60 to 200°C.
(12) The method for producing a reclaimed white clay according to any one of (1) to (11) above, wherein the difference between the L* value in the CIELab method of an oil or fat that has been refined using the white clay with a reclaimed decolorizing function, and the L* value in the CIELab method of an oil or fat that has been refined using an unused white clay is not more than 2.
(13) The method for producing a reclaimed white clay according to any one of (1) to (11) above, wherein the difference between the Y value in a Lovibond colorimeter (cell length: 5.25 inches) of an oil or fat that has been refined using the white clay with a reclaimed decolorizing function, and the Y value in the Lovibond colorimeter of an oil or fat that has been refined using an unused white clay is not more than 25.
(14) The method for producing a reclaimed white clay according to any one of (1) to (13) above, wherein as a result of the esterification reaction between the lower alcohol and the oils or fats and/or free fatty acids within the oily component, an ester having an acid value of not more than 10 is obtained.
(15) The method for producing a reclaimed white clay according to any one of (1) to (14) above, wherein the acidic catalyst is an acid catalyst.
(16) The method for producing a reclaimed white clay according to (15) above, wherein the acid catalyst is sulfuric acid.
(17) The method for producing a reclaimed white clay according to any one of (1) to (16) above, wherein the lower alcohol is an alcohol having a carbon number of not more than 8.
(18) The method for producing a reclaimed white clay according to any one of (1) to (17) above, wherein after the reclamation step or the extraction step, the reclaimed white clay with a reclaimed decolorizing function is washed with a solvent having a solubility parameter (SP value) of 7 to 15.
(19) The method for producing a reclaimed white clay according to any one of (1) to (17) above, wherein after the reclamation step or the extraction step, the pH of the reclaimed white clay with a reclaimed decolorizing function is adjusted to a pH value of 3 to 8, and the reclaimed white clay is then washed with a solvent having a solubility parameter (SP value) of 7 to 15 and a pH of 3 to 8.
(20) The method for producing a reclaimed white clay according to (18) or (19) above, wherein the washing of the reclaimed white clay is performed at 0 to 200°C.
(21) The method for producing a reclaimed white clay according to (19) above, wherein following washing with the solvent having an SP value of 7 to 15 and a pH of 3 to 8, salts are removed from the reclaimed white clay.
(22) The method for producing a reclaimed white clay according to (21) above, wherein following washing with the solvent having an SP value of 7 to 15 and a pH of 3 to 8, the reclaimed white clay is washed with water.
(23) The method for producing a reclaimed white clay according to any one of (1) to (22) above, wherein the oil or fat is a vegetable oil.
(24) The method for producing a reclaimed white clay according to (23) above, wherein the oil or fat is rapeseed oil.
(25) A method for producing an ester having an acid value of not more than 10 by the method for producing a reclaimed white clay according to any one of (1) to (24) above.
(26) A reclaimed white clay, produced by the method for producing a reclaimed white clay according to any one of (1) to (24) above.
(27) A method for producing a refined oil or fat, including a step of decolorizing the oil or fat using the reclaimed white clay according to (26) above.

In other words, the present invention relates to the following aspects.
[1] A method for producing a reclaimed white clay which reclaims the decolorizing function of a waste white clay,
   the method having a pretreatment step of holding a waste white clay that has been used in refining an oil or fat, and a lower alcohol in a mixed state, and a reclamation step, wherein
   the reclamation step includes mixing an acidic catalyst into the mixture of the waste white clay and the lower alcohol obtained after the pretreatment step, and
   simultaneously performing an extraction of an oily component from the waste white clay, and an esterification reaction between the lower alcohol and at least one component selected from the group consisting of oils or fats and free fatty acids within the extracted oily component.
[2] The method for producing a reclaimed white clay according to [1] above, wherein in the pretreatment step, the time for which the mixture of the waste white clay and the lower alcohol is held is at least 3 minutes but not more than 24 hours.
[3] The method for producing a reclaimed white clay according to [1] or [2] above, wherein the temperature of the mixture of the waste white clay and the lower alcohol at the completion of the pretreatment step is from 60 to 200°C.
[4] The method for producing a reclaimed white clay according to any one of [1] to [3] above, wherein in the reclamation step, the acidic catalyst is mixed into the mixture prepared in the pretreatment step with the lower alcohol in the mixture in a state of reflux, and the extraction of the oily component and the esterification reaction are performed with the lower alcohol in a state of reflux.
[5] The method for producing a reclaimed white clay according to any one of [1] to [4] above, wherein the reclamation step includes performing, either once or a plurality of times, either a treatment in which a portion of the liquid component within the mixture is substituted with a lower alcohol, or a treatment in which additional lower alcohol is added to the mixture.
[6] The method for producing a reclaimed white clay according to any one of [1] to [5] above, further including an extraction step of mixing the reclaimed white clay, collected by a solid-liquid separation treatment from the mixture containing the reclaimed white clay obtained following the reclamation step, with a lower alcohol, and performing an additional extraction of an oily component from the resulting mixture.
[7] The method for producing a reclaimed white clay according to any one of [1] to [6] above, wherein in the pretreatment step, 50 to 900 parts by mass of the lower alcohol is mixed per 100 parts by mass of the waste white clay.
[8] A method for producing a reclaimed white clay which reclaims the decolorizing function of a waste white clay, the method having a reclamation step of
   mixing a waste white clay that has been used in refining an oil or fat, a lower alcohol and an acidic catalyst, and
   simultaneously performing an extraction of an oily component from the waste white clay, and an esterification reaction between the lower alcohol and at least one component selected from the group consisting of oils or fats and free fatty acids within the extracted oily component, wherein
   the reclamation step includes performing, either once or a plurality of times, either a treatment in which a portion of the liquid component within the mixture is substituted with a lower alcohol, or a treatment in which additional lower alcohol is added to the mixture.
[9] A method for producing a reclaimed white clay which reclaims the decolorizing function of a waste white clay, the method including a reclamation step and an extraction step, wherein
   the reclamation step includes mixing a waste white clay that has been used in refining an oil or fat, a lower alcohol and an acidic catalyst, and
   simultaneously performing an extraction of an oily component from the waste white clay, and an esterification reaction between the lower alcohol and at least one component selected from the group consisting of oils or fats and free fatty acids within the extracted oily component, and
   the extraction step includes collecting the reclaimed white clay by a solid-liquid separation treatment from the mixture containing the reclaimed white clay obtained following the reclamation step, and
   mixing the collected reclaimed white clay with a lower alcohol, and performing an additional extraction of an oily component from the resulting mixture.
[10] The method for producing a reclaimed white clay according to [8] or [9] above, wherein in the reclamation step, 50 to 900 parts by mass of the lower alcohol is mixed per 100 parts by mass of the waste white clay.
[11] The method for producing a reclaimed white clay according to any one of [1] to [10] above, wherein in the reclamation step, the extraction of the oily component and the esterification reaction are performed at a temperature of 60 to 200°C.
[12] The method for producing a reclaimed white clay according to any one of [1] to [11] above, wherein the difference between the L* value in the CIELab method of an oil or fat that has been refined using the reclaimed white clay with a reclaimed decolorizing function, and the L* value in the CIELab method of an oil or fat that has been refined using an unused white clay is not more than 2.
[13] The method for producing a reclaimed white clay according to any one of [1] to [11] above, wherein the difference between the Y value in a Lovibond colorimeter having a cell length of 5.25 inches of an oil or fat that has been refined using the reclaimed white clay with a reclaimed decolorizing function, and the Y value in the Lovibond colorimeter of an oil or fat that has been refined using an unused white clay is not more than 25.
[14] The method for producing a reclaimed white clay according to any one of [1] to [13] above, wherein as a result of the esterification reaction between the lower alcohol and at least one component selected from the group consisting of oils or fats and free fatty acids within the extracted oily component, an ester having an acid value of at least 0 but not more than 10 is obtained.
[15] The method for producing a reclaimed white clay according to any one of [1] to [14] above, wherein the acidic catalyst is an acid catalyst.
[16] The method for producing a reclaimed white clay according to [15] above, wherein the acid catalyst is sulfuric acid.
[17] The method for producing a reclaimed white clay according to any one of [1] to [16] above, wherein the lower alcohol is an alcohol having a carbon number of at least 1 but not more than 8.
[18] The method for producing a reclaimed white clay according to any one of [1] to [17] above, further including a step of washing the reclaimed white clay with a reclaimed decolorizing function obtained following the reclamation step or the extraction step with a solvent having an SP value which indicates the solubility parameter of 7 to 15.
[19] The method for producing a reclaimed white clay according to any one of [1] to [17] above, further including a step of adjusting the pH of the reclaimed white clay with a reclaimed decolorizing function obtained following the reclamation step or the extraction step to a pH value of 3 to 8, and then washing the reclaimed white clay with a solvent having an SP value which indicates the solubility parameter of 7 to 15 and a pH of 3 to 8.
[20] The method for producing a reclaimed white clay according to [18] or [19] above, wherein the washing of the reclaimed white clay is performed at 0 to 200°C.
[21] The method for producing a reclaimed white clay according to [19] above, further including a step of removing salts from the reclaimed white clay obtained following the washing with the solvent having an SP value which indicates the solubility parameter of 7 to 15 and a pH of 3 to 8.
[22] The method for producing a reclaimed white clay according to [21] above, wherein following the washing with the solvent having an SP value which indicates the solubility parameter of 7 to 15 and a pH of 3 to 8, the reclaimed white clay is washed with water.
[23] The method for producing a reclaimed white clay according to any one of [1] to [22] above, wherein the oil or fat is a vegetable oil.
[24] The method for producing a reclaimed white clay according to [23] above, wherein the oil or fat is rapeseed oil.
[25] A method for producing an ester having an acid value of at least 0 but not more than 10 by the method for producing a reclaimed white clay according to any one of [1] to [24] above.
[26] A reclaimed white clay, produced by the method for producing a reclaimed white clay according to any one of [1] to [24] above.
[27] A method for producing a refined oil or fat, including a step of decolorizing the oil or fat using the reclaimed white clay according to [26] above.

### EFFECTS OF THE INVENTION

According to the present invention, production of an ester from an oily component within a waste white clay, and reclamation of the decolorizing function of the waste white clay can be performed simply and simultaneously. Because the produced ester can be used as a biofuel, thermal recycling can be achieved with ease. Further, by reclaiming the decolorizing function of the waste white clay, the reclaimed white clay can be used repeatedly in the process of decolorizing oils and fats. Accordingly, the costs associated with purchasing white clay and disposing of waste white clay can be reduced, and the impact on the environment caused by the disposal of waste white clay can also be reduced.

### BRIEF DESCRIPTION OF THE DRAWINGS

FIG. 1 is a graph illustrating the change over time in the proportions of ester, free fatty acid, and oil and fat obtained upon treatment under Conditions 1 in Reference Example 1.
FIG. 2 is a graph illustrating the change over time in the proportions of ester, free fatty acid, and oil and fat obtained upon treatment under Conditions 2 in Reference Example 1.
FIG. 3 is a graph illustrating the change over time in the amount of oil and fat extracted upon treatment under Conditions 1 in Reference Example 1.
FIG. 4 is a graph illustrating the change over time in the amount of oil and fat extracted upon treatment under Conditions 2 in Reference Example 1.
FIG. 5 is a graph illustrating the L* values in the CIELab method of oils that have been subjected to a decolorizing step using an unused white clay or a white clay that has been reclaimed by treatment under Conditions 1 or 2, and a non-decolorized oil in Reference Example 1.
FIG. 6 is a diagram prepared by plotting the a* values and b* values in the CIELab method of oils that have been subjected to a decolorizing step using an unused white clay or a white clay that has been reclaimed by treatment under Conditions 1 or 2, and a non-decolorized oil in Reference Example 1.
FIG. 7 is a graph illustrating the change over time in the proportions of ester, free fatty acid and oil and fat obtained upon treatment under Conditions 1 in Reference Example 2.
FIG. 8 is a graph illustrating the change over time in the proportions of ester, free fatty acid and oil and fat obtained upon treatment under Conditions 2 in Reference Example 2.
FIG. 9 is a graph illustrating the change over time in the proportions of ester, free fatty acid and oil and fat obtained upon treatment under Conditions 3 in Reference Example 2.
FIG. 10 is a graph illustrating the change over time in the proportions of ester, free fatty acid and oil and fat obtained upon treatment under Conditions 4 in Reference Example 2.
FIG. 11 is a graph illustrating the change over time in the proportions of ester, free fatty acid and oil and fat obtained upon treatment under Conditions 1 in Reference Example 3.
FIG. 12 is a graph illustrating the change over time in the proportions of ester, free fatty acid and oil and fat obtained upon treatment under Conditions 2 in Reference Example 3.
FIG. 13 is a graph illustrating the change over time in the amount of oil and fat extracted upon treatment under Conditions 1 in Reference Example 3.
FIG. 14 is a graph illustrating the change over time in the amount of oil and fat extracted upon treatment under Conditions 2 in Reference Example 3.
FIG. 15 is a graph illustrating the change over time in the proportions of ester, free fatty acid and oil and fat obtained upon treatment under Conditions 1 in Reference Example 4.
FIG. 16 is a graph illustrating the change over time in the proportions of ester, free fatty acid and oil and fat obtained upon treatment under Conditions 2 in Reference Example 4.
FIG. 17 is a graph illustrating the change over time in the amount of oil and fat extracted upon treatment under Conditions 1 in Reference Example 4.
FIG. 18 is a graph illustrating the change over time in the amount of oil and fat extracted upon treatment under Conditions 2 in Reference Example 4.

### EMBODIMENTS FOR CARRYING OUT THE INVENTION

In the present invention, "white clay" means a substance having the mineral montmorillonite as the main component and having a decolorizing function relative to oils and fats. In the present description, the term "white clay" includes naturally occurring acidic white clay and activated white clay obtained by treating acidic white clay with an inorganic acid such as hydrochloric acid.

In the present invention, "waste white clay" means white clay that has been used in refining oil or fat. There are no particular limitations on the oil or fat refining method, and a similar method to that described below for the method for producing a refined oil or fat can be used. The waste white clay supplied to the method for producing a reclaimed white clay according to the present invention is preferably subjected to cutting or grinding or the like in advance (prior to mixing with the lower alcohol) for the purposes of achieving homogeneity and improving the reactivity due to micronization.

In the present invention, the expression "oil or fat" means an ester of a fatty acid and glycerol (glycerol fatty acid ester or fatty acid glyceride). There are no particular limitations on the oil or fat in the present invention, provided it contains a fatty acid glyceride, and examples include oils compressed and extracted from plant-based raw materials such as soybeans, sesame seeds, rapeseed, safflower, sunflower and corn, and oils or fats extracted from animal-based raw materials such as fish and livestock meat. Among these, the oil or fat in the present invention is preferably a vegetable oil extracted from a plant-based raw material, and is more preferably rapeseed oil. Furthermore, the oil or fat in the present invention is preferably an oil or fat that has already been subjected to a deacidification step for removing free acid using an alkali, but an oil or fat that contains small amounts of free acid or other impurities may also be used.

The method for producing a reclaimed white clay according to the present invention has three main aspects, and each aspect includes mixing of a waste white clay, a lower alcohol and an acidic catalyst, and simultaneously performing an extraction of an oily component from the waste white clay to reclaim the decolorizing function of the waste white clay, and an esterification reaction between the lower alcohol and the oils or fats and/or free fatty acids within the oily component.

By mixing the waste white clay and the lower alcohol, the oily components and colored substances that exist inside the pores of the waste white clay are extracted, and the decolorizing function of the waste white clay is restored. As a result, this waste white clay can be reused in the refining of oils and fats or the like. In particular, by mixing the waste white clay and the lower alcohol in the presence of an acidic catalyst, the oily component can be extracted more efficiently than the case in which only the lower alcohol is used, and the decolorizing function of the waste white clay can be restored to a degree that enables reuse as a white clay. In addition, by repeating the decolorizing step and the reclamation of the decolorizing function, the white clay can be used repeatedly.

Further, due to the presence of the acidic catalyst, an esterification reaction between the lower alcohol and the oils or fats and/or the free fatty acids contained in the oily component extracted from the waste white clay occurs at the same time as the reclamation of the decolorizing function of the waste white clay. As a result of this esterification reaction, esters of fatty acids and the lower alcohol are obtained from the oils or fats and/or the free fatty acids. The lower fatty acid esters obtained by this esterification have a lower viscosity than the oil or fat, and are therefore suited to use as fuels or the like.

In the present invention, the term "esterification reaction means both (1) a reaction in which the main chains of an oil or fat (glycerol fatty acid ester) and a lower alcohol undergo a direct exchange, generating a fatty acid ester of the lower alcohol, and (2) a reaction in which a free fatty acid produced by decomposition of a glycerol fatty acid ester and a lower alcohol undergo esterification, generating a fatty acid ester of the lower alcohol.

In the present invention, the term "lower alcohol" means a linear or branched alcohol with a carbon number of at least 1 but not more than 11. In the present invention, a single type of lower alcohol may be used alone, or a mixture of two or more types of lower alcohol may be used.

The lower alcohol may be linear or branched, and may be either monohydric, or dihydric or greater. Examples include linear monohydric alcohols such as methanol, ethanol, 1-propanol, 1-butanol, 1-pentanol and 1-hexanol, and branched monohydric alcohols such as 2-propanol and 2-butanol.

Among these, the lower alcohol in the present invention is preferably a monohydric alcohol. The lower alcohol in the present invention is preferably linear, and the carbon number is preferably at least 1 but not more than 8, more preferably at least 1 but not more than 6, and still more preferably at least 1 but not more than 3. Specifically, this type of lower alcohol is preferably methanol, ethanol, 1-propanol or a mixture thereof, is more preferably methanol, ethanol, or a mixture of methanol and ethanol, and in order to enable the reclaimed white clay to be used in the refining of edible oils and fats, is most preferably ethanol, which can be used in foodstuffs.

The lower alcohol used in the present invention may be an alcohol having a purity of 100%, or may be a lower purity alcohol containing another solvent such as water.

For example, the purity of the lower alcohol used in the present invention is preferably from 50 to 100%, more preferably from 90 to 100%, and still more preferably from 90 to 96%. A higher purity means the final amount of liquid waste can be suppressed, and is therefore preferable. On the other hand, when a lower alcohol having a purity of 100% is used, free fatty acids are very unlikely to be included within the oil fraction extracted from the waste white clay, whereas when a lower alcohol having a purity of 90 to 96% is used, the extracted oil fraction tends to contain approximately 5% of free fatty acids.

In the present invention, there are no particular limitations on the acidic catalyst, provided it is a catalyst capable of favorably promoting the esterification reaction, and the types of catalysts typically used as the catalysts for transesterification reactions or esterification reactions can be used. The acidic catalyst used in the present invention may be an acid catalyst or an acidic solid catalyst.

In the present description and the claims, an "acid catalyst" means a catalyst which promotes an acid catalytic reaction. Specific examples of acid catalysts include inorganic acids such as sulfuric acid, hydrochloric acid and nitric acid, and organic acids such as phosphoric acid and sulfonic acids. Further, an "acidic solid catalyst" means a solid catalyst which promotes an acid catalytic reaction. Specific examples of acidic solid catalysts include solid acid catalysts such as ion exchange resins, zeolites and silicon dioxide complexes.

In the present invention, a single type of acidic catalyst may be used, or an appropriate combination of two or more types of acidic catalyst may be used. Among the various possibilities, the acidic catalyst in the present invention is preferably an acid catalyst, is more preferably sulfuric acid, sulfonic acid, a mixture of sulfuric acid and sulfonic acid, or a combination of one of these with another acidic catalyst, and from the viewpoint of economic viability, is most preferably sulfuric acid.

Furthermore, in the method for producing a reclaimed white clay according to the present invention, other components may also be mixed besides the waste white clay, the lower alcohol and the acidic catalyst. There are no particular limitations on these other components, provided they are components which do not impair the extraction of the oily component and the esterification reaction, and examples include co-catalysts and solvents. Examples of the co-catalysts include thionyl chloride, sodium citrate, dimethyl acetal, and metal catalysts and salts thereof. Examples of the metal catalysts include zinc, aluminum and tin. Examples of the solvents include xylene, toluene, acetone and hexane. These other components may be added to the waste white clay together with the lower alcohol, together with the acidic catalyst, or separately from both the lower alcohol and the acidic catalyst.

The amount added of these other components is preferably an amount that improves the reaction rate.

### [Method for Producing Reclaimed White Clay according to First Aspect]

Among the methods for producing a reclaimed white clay according to the present invention, the first aspect is a method for reclaiming the decolorizing function of a waste white clay, the method including a pretreatment step of holding a waste white clay that has been used in refining an oil or fat, and a lower alcohol in a mixed state, and a reclamation step, performed after the pretreatment step, of mixing an acidic catalyst into the mixture of the waste white clay and the lower alcohol, and simultaneously performing an extraction of an oily component from the waste white clay, and an esterification reaction between the lower alcohol and the oils or fats and/or free fatty acids within the oily component.

In other words, the first aspect of the present invention is a method for producing a reclaimed white clay which reclaims the decolorizing function of a waste white clay,
the method having a pretreatment step of holding a waste white clay that has been used in refining an oil or fat, and a lower alcohol in a mixed state, and a reclamation step, wherein
the reclamation step includes mixing an acidic catalyst into the mixture of the waste white clay and the lower alcohol after the pretreatment step, and
simultaneously performing an extraction of an oily component from the waste white clay, and an esterification reaction between the lower alcohol and the oils or fats and/or free fatty acids within the extracted oily component.

In the first aspect of the present invention, prior to the mixing of the acidic catalyst, the waste white clay and the lower alcohol are held in a premixed state. By holding this mixture, the decolorizing function of the waste white clay can be restored more satisfactorily than the case in which the acidic catalyst and the lower alcohol are mixed with the waste white clay at the same time. Although the reason that this type of effect is obtained is not entirely clear, it is thought that by performing the pretreatment step from the method for producing a reclaimed white clay according to the first aspect of the present invention, those components among the oily components in the waste white clay that are difficult to extract and remove under acidic conditions can be extracted with far better efficiency than the case in which the pretreatment step is not performed. Further, it is thought that because the lower alcohol can penetrate thoroughly into the interior of the waste white clay before the surface of the waste white clay is denatured by the acidic catalyst, extraction of the oily component from inside the waste white clay occurs more readily. Moreover, various components other than the oily component, such as the chlorophyll contained within the oil or fat, are also adsorbed to the waste white clay. As a result, by performing the pretreatment step from the method for producing a reclaimed white clay according to the first aspect of the present invention, those components among these other components that are difficult to extract and remove under acidic conditions can be extracted more efficiently from the waste white clay. Further, because the method for producing a reclaimed white clay according to the third aspect of the present invention described below requires a solid-liquid separation treatment between the reclamation step and the extraction step, **a** plurality of reaction vessels are generally necessary, but in the method for producing a reclaimed white clay according to the first aspect of the present invention, a solid-liquid separation treatment is not required in the pretreatment step or the reclamation step, and therefore the method is simple and requires only a single reaction vessel.

Each of the steps is described below.

First, in the pretreatment step, the waste white clay that has been used in refining an oil or fat and the lower alcohol are held in a mixed state. Although there are no particular limitations on the mixing ratio between the waste white clay and the lower alcohol, the amount of the lower alcohol is preferably from 50 to 900 parts by mass, more preferably from 100 to 900 parts by mass, and still more preferably from 200 to 900 parts by mass, per 100 parts by mass of the waste white clay. In the pretreatment step, the total amount of the lower alcohol required in the subsequent reclamation step may be mixed with the waste white clay, or an amount of the lower alcohol that is less than the amount required in the reclamation step may be mixed with the waste white clay, with additional lower alcohol then added following the pretreatment step. Further, in the pretreatment step, the total amount of the lower alcohol may be mixed with the waste white clay in a single addition, or the lower alcohol may be added to, and mixed with, the waste white clay in a plurality of separate portions.

In the pretreatment step, there are no particular limitations on the time for which the prepared mixture of the waste white clay and the lower alcohol is held, but if this time is too short, then the effects of the pretreatment step do not manifest satisfactorily. Further, when the temperature of the mixture of the waste white clay and the lower alcohol is high, even if the time for which the mixture of the waste white clay and the lower alcohol is held is shorter than that for the case in which the temperature is lower, similar effects can be achieved. In the present invention, the time for which the mixture of the waste white clay and the lower alcohol is held is preferably at least 3 minutes, more preferably from 3 minutes to 24 hours, still more preferably from 3 minutes to 8 hours, particularly preferably from 3 minutes to 2 hours, and most preferably from 5 minutes to 2 hours.

In the pretreatment step, the prepared mixture of the waste white clay and the lower alcohol may be held at a fixed temperature, or may be held in a heated state. Because it enables more thorough blending of the waste white clay and the lower alcohol, and yields a higher extraction efficiency for various components such as the oily component, the mixture of the waste white clay and the lower alcohol is preferably held at a temperature that is higher than normal temperature, and is more preferably held in a heated state. Specifically, the temperature of the mixture of the waste white clay and the lower alcohol at the completion of the pretreatment step is preferably heated to 60 to 200°C, more preferably heated to 60 to 130°C, still more preferably heated to 60 to 100°C, and particularly preferably heated to a temperature that places the lower alcohol in a state of reflux.

For example, the pretreatment step can be performed by mixing the waste white clay and the lower alcohol at room temperature, and then heating the obtained mixture until a state of reflux is obtained. In this case, the pretreatment step may be halted as soon as the state of reflux is confirmed, with the acidic catalyst then added to the mixture of the waste white clay and the lower alcohol to start the reclamation step, or the state of reflux may be held for a certain period of time.

In the pretreatment step, the mixture of the waste white clay and the lower alcohol may be held in a still state, but is preferably held while undergoing stirring using a disper, homomixer, stirrer or propeller or the like, and is more preferably held under stirring with a disper or the like while being heated.

Subsequently, the reclamation step is performed following the pretreatment step, by mixing the acidic catalyst into the mixture of the waste white clay and the lower alcohol, and simultaneously performing an extraction of an oily component from the waste white clay, and an esterification reaction between the lower alcohol and the oils or fats and/or free fatty acids within the extracted oily component. The reclamation step is started by adding and mixing the acidic catalyst with the mixture of the waste white clay and the lower alcohol obtained following the pretreatment step. At this time, additional lower alcohol may be added at the same time as the acidic catalyst.

In the reclamation step, although there are no particular limitations on the amount (content) of the lower alcohol within the mixture containing the waste white clay, the lower alcohol and the acidic catalyst, the amount is preferably from 50 to 900 parts by mass, more preferably from 100 to 900 parts by mass, and still more preferably from 200 to 900 parts by mass, per 100 parts by mass of the waste white clay. From the viewpoint of the reclamation function, there are no particular problems if the amount used of the lower alcohol is large, and an amount of the lower alcohol of 400 to 900 parts by mass per 100 parts by mass of the waste white clay is particularly desirable. On the other hand, from the viewpoints of treating the liquid waste and the costs involved, it is preferable that the amount used of the lower alcohol does not become excessive, and an amount of 200 to 400 parts by mass is preferable, and an amount of 200 to 300 parts by mass is particularly desirable. By ensuring that the amount used of the lower alcohol is at least 50 parts by mass per 100 parts by mass of the waste white clay, the contact probability for the lower alcohol and the waste white clay is increased, enabling the esterification to proceed more favorably. Further, in those cases where a solvent or the like is not used as an additional component besides the waste white clay, the lower alcohol and the acidic catalyst, an amount of the lower alcohol of at least 50 parts by mass per 100 parts by mass of the waste white clay enables the lower alcohol to also perform the role of a solvent, enabling better mixing and a higher contact frequency between the waste white clay, the lower alcohol and the acidic catalyst.

In the reclamation step, although there are no particular limitations on the amount (content) of the acidic catalyst in the mixture containing the waste white clay, the lower alcohol and the acidic catalyst, the amount of the acidic catalyst is preferably from 0.1 to 100 parts by mass, more preferably from 0.5 to 80 parts by mass, still more preferably from 1 to 40 parts by mass, and particularly preferably from 2 to 10 parts by mass, per 100 parts by mass of the waste white clay. By ensuring that the amount used of the acidic catalyst satisfies the above range, the esterification reaction between the lower alcohol and the oils or fats and/or the free fatty acids can be promoted particularly effectively.

The extraction of the oily component from the waste white clay and the esterification reaction between the lower alcohol and the oils or fats and/or free fatty acids within the oily component can be performed by mixing the waste white clay, the lower alcohol and the acidic catalyst, but in order to better promote the extraction and the esterification reaction, the mixture of the waste white clay, the lower alcohol and the acidic catalyst is preferably stirred with a disper, homomixer, stirrer or propeller or the like, while being heated. The heating temperature is preferably from 60 to 200°C, more preferably from 60 to 130°C, and still more preferably from 60 to 100°C.

In particular, it is preferable that the acidic catalyst is added while the lower alcohol within the mixture prepared in the pretreatment step is in a state of reflux, with the subsequent extraction of the oily component and the esterification reaction also performed with the lower alcohol in a state of reflux.

There are no particular limitations on the length of time for which the extraction of the oily component and the esterification reaction are performed, and this time can be determined appropriately in accordance with the amount and quality of the waste white clay, and the heating temperature and the like. Further, the amount of the fatty acid ester of the lower alcohol produced by the esterification reaction is preferably analyzed using a conventional device such as a gas chromatograph, with the reaction time then determined based on the amount of production. The amount of the oily component extracted tends to increase as the reaction time is increased, but from the viewpoint of economic viability, the reaction time is preferably restricted to not more than 12 hours, and is more preferably from 1 to 8 hours, still more preferably from 2 to 8 hours, and still more preferably from 3 to 8 hours.

### [Method for Producing Reclaimed White Clay according to Second Aspect]

Among the methods for producing a reclaimed white clay according to the present invention, the second aspect is a method for reclaiming the decolorizing function of a waste white clay, the method including a reclamation step of mixing a waste white clay that has been used in refining an oil or fat, a lower alcohol and an acidic catalyst, and simultaneously performing an extraction of an oily component from the waste white clay, and an esterification reaction between the lower alcohol and the oils or fats and/or free fatty acids within the oily component, wherein in the reclamation step, a treatment in which a portion of the liquid component within the mixture is substituted with a lower alcohol, or additional lower alcohol is added to the mixture, is performed either once or a plurality of times.

In other words, the second aspect of the present invention is a method for producing a reclaimed white clay which reclaims the decolorizing function of a waste white clay,
the method having a reclamation step of mixing a waste white clay that has been used in refining an oil or fat, a lower alcohol and an acidic catalyst, and
simultaneously performing an extraction of an oily component from the waste white clay, and an esterification reaction between the lower alcohol and the oils or fats and/or free fatty acids within the oily component, wherein
the reclamation step also includes performing, either once or a plurality of times, either a treatment in which a portion of the liquid component within the mixture is substituted with a lower alcohol, or a treatment in which additional lower alcohol is added to the mixture.

In the second aspect of the present invention, during the reclamation step, by adding fresh lower alcohol to the reaction system, the extraction efficiency of the oily component from the waste white clay can be improved. Further, because the method for producing a reclaimed white clay according to the third aspect of the present invention described below requires a solid-liquid separation treatment between the reclamation step and the extraction step, a plurality of reaction vessels are generally necessary, but in the method for producing a reclaimed white clay according to the second aspect of the present invention, a solid-liquid separation treatment is not required in the reclamation step, and therefore the method is simple and requires only a single reaction vessel.

The reclamation step in the method for producing a reclaimed white clay according to the second aspect of the present invention is the same as the reclamation step in the method for producing a reclaimed white clay according to the first aspect of the present invention, with the exceptions that the lower alcohol and the waste white clay are not held in a mixed state prior to the addition of the acidic catalyst to the waste white clay, and the amounts of the acidic catalyst and the lower alcohol relative to the waste white clay during the reaction are not necessarily fixed. In other words, with the exception of the points described below, the reclamation step is performed in the same manner as the reclamation step in the method for producing a reclaimed white clay according to the first aspect of the present invention.

In the second aspect of the present invention, in the reclamation step, there are no particular limitations on the method used for mixing the waste white clay, the lower alcohol and the acidic catalyst, and for example, the waste white clay, the lower alcohol and the acidic catalyst may all be mixed together simultaneously, or the lower alcohol and the acidic catalyst (for example, sulfuric acid or the like) may be added sequentially to the waste white clay.

In order to better promote the extraction and the esterification reaction, the reclamation step is preferably performed by stirring the mixture of the waste white clay, the lower alcohol and the acidic catalyst with a disper, homomixer, stirrer or propeller or the like, while heating the mixture. The heating temperature is not particularly limited, but is preferably from 60 to 200°C, more preferably from 60 to 130°C, and still more preferably from 60 to 100°C. It is particularly desirable to perform the reclamation step with the lower alcohol within the mixture of the waste white clay, the lower alcohol and the acidic catalyst in a state of reflux.

In the method for producing a reclaimed white clay according to the second aspect of the present invention, during the reclamation step, a portion of the liquid component of the mixture of the waste white clay, the lower alcohol and the acidic catalyst is substituted with a lower alcohol, or additional lower alcohol is added to the mixture, either once or a plurality of times. The additional lower alcohol added to the reaction system may be a different type of alcohol from the lower alcohol initially mixed with the waste white clay, but is preferably the same alcohol.

When the liquid component is substituted with a lower alcohol, additional acidic catalyst may also be added at the same time, but by adding only the lower alcohol, the extraction of the oily component from the waste white clay can be performed in a state in which the acidic catalyst concentration has been reduced in a stepwise manner. This also applies to the case in which no liquid component is removed, and additional lower alcohol is added to the reaction system.

Here, the "liquid component" means the liquid component within the mixture of the waste white clay, the lower alcohol and the acidic catalyst.

There are no particular limitations on the method used for substituting the liquid component with the lower alcohol, but in terms of simplicity, a method in which the supernatant is collected from the mixture in a state in which the waste white clay has been allowed to settle naturally, and additional lower alcohol is then added is preferred. In those cases where the extraction and the esterification reaction are being performed in a heated and stirred state, the heating and stirring is halted temporarily to allow the waste white clay to settle naturally. There are no particular limitations on the amount of the liquid component substituted, and this amount can be determined appropriately in accordance with the method used for removing the liquid component from the mixture. For example, in the case where the supernatant is collected from the mixture in a state in which the waste white clay has been allowed to settle naturally, 10 to 60% by mass of the liquid component within the original mixture is preferably substituted, and substitution of 40 to 60% by mass of the liquid component is more preferable.

In the case in which no liquid component is removed, and additional lower alcohol is added to the mixture, there is no necessity to separate the waste white clay and the liquid component when adding the new lower alcohol. Accordingly, in those cases where the extraction and the esterification reaction are being performed in a stirred state, the additional lower alcohol can be added without halting the stirring. There are no particular limitations on the amount of the lower alcohol added, and the amount can be determined appropriately with due consideration of the volume of the reaction vessel being used, and the liquid waste treatment required. For example, an amount of the lower alcohol equivalent to 10 to 60% by mass of the liquid component within the original mixture is preferably added, and the addition of an amount of the lower alcohol equivalent to 40 to 60% by mass of the liquid component is more preferable.

The number of repetitions of the substitution of the liquid component with the lower alcohol, or the addition of an alcohol with a carbon number of 1 to 11, is typically from 1 to 10 repetitions, preferably from 1 to 5 repetitions, and more preferably from 1 to 3 repetitions.

### [Method for Producing Reclaimed White Clay according to Third Aspect]

Among the methods for producing a reclaimed white clay according to the present invention, the third aspect is a method for reclaiming the decolorizing function of a waste white clay, the method including a reclamation step of mixing a waste white clay that has been used in refining an oil or fat, a lower alcohol and an acidic catalyst, and simultaneously performing an extraction of an oily component from the waste white clay, and an esterification reaction between the lower alcohol and the oils or fats and/or free fatty acids within the oily component, and an extraction step, performed after the reclamation step, of mixing the reclaimed white clay, collected by a solid-liquid separation treatment from the obtained mixture containing the reclaimed white clay, with a lower alcohol, and performing an additional extraction of an oily component from the reclaimed white clay.

In other words, the third aspect of the present invention is a method for producing a reclaimed white clay which reclaims the decolorizing function of a waste white clay,
the method including a reclamation step and an extraction step, wherein
the reclamation step includes mixing a waste white clay that has been used in refining an oil or fat, a lower alcohol and an acidic catalyst, and
simultaneously performing an extraction of an oily component from the waste white clay, and an esterification reaction between the lower alcohol and the oils or fats and/or free fatty acids within the oily component, and
the extraction step includes collecting the reclaimed white clay by a solid-liquid separation treatment from the mixture containing the reclaimed white clay obtained following the reclamation step, and
mixing the collected reclaimed white clay with a lower alcohol, and performing an additional extraction of an oily component from the resulting mixture.

In the third aspect of the present invention, the waste white clay separated and removed from the liquid component containing the acidic catalyst by a solid-liquid separation treatment performed following the reclamation step is subjected to an additional extraction of the various components adsorbed to this waste white clay using a lower alcohol. This enables the extraction efficiency of the adsorbed components from the waste white clay to be enhanced.

The reclamation step in the method for producing a reclaimed white clay according to the third aspect of the present invention can be performed in the same manner as the reclamation step in the method for producing a reclaimed white clay according to the second aspect of the present invention.

In the extraction step, the reclaimed white clay, collected by a solid-liquid separation treatment from the mixture containing the reclaimed white clay obtained following the reclamation step, is mixed with the lower alcohol, and additional adsorbed components are extracted from the reclaimed white clay. The solid-liquid separation treatment can be selected from conventional solid-liquid separation treatments such as filtration treatments. The lower alcohol is added and mixed with the collected reclaimed white clay, and the resulting mixture is subjected to an extraction of adsorbed components in the same manner as the aforementioned reclamation step.

Although there are no particular limitations on the amount (content) of the lower alcohol mixed with the reclaimed white clay, the amount is preferably from 50 to 900 parts by mass, more preferably from 100 to 900 parts by mass, and still more preferably from 200 to 900 parts by mass, per 100 parts by mass of the reclaimed white clay. From the viewpoint of extraction of the adsorbed components, there are no particular problems if the amount used of the lower alcohol is large, and an amount of the lower alcohol of 400 to 900 parts by mass is particularly desirable. On the other hand, from the viewpoints of treating the liquid waste and the costs involved, it is preferable that the amount used of the lower alcohol does not become excessive, and an amount of 200 to 400 parts by mass is preferable, and an amount of 200 to 300 parts by mass is particularly desirable.

The extraction of the adsorbed components from the reclaimed white clay can be performed by mixing the reclaimed white clay and the lower alcohol, but in order to better promote the extraction, the mixture of the reclaimed white clay and the lower alcohol is preferably stirred with a disper, homomixer, stirrer or propeller or the like, while being heated. The heating temperature is preferably from 60 to 200°C, more preferably from 60 to 130°C, and still more preferably from 60 to 100°C. It is particularly desirable to perform the extraction with the lower alcohol within the mixture of the reclaimed white clay and the lower alcohol in a state of reflux.

There are no particular limitations on the time for which the extraction of the adsorbed components is performed or the purity of the lower alcohol that is used, and these values can be determined appropriately in accordance with the amount and quality of the reclaimed white clay, and the heating temperature and the like. The amount of adsorbed components extracted tends to increase as the extraction time is increased, but from the viewpoint of economic viability, the extraction time is preferably restricted to not more than 12 hours, and is more preferably from 1 to 8 hours, still more preferably from 2 to 8 hours, and still more preferably from 3 to 8 hours. Further, from the viewpoint of reducing the amount of liquid waste, the purity of the lower alcohol used is preferably high, but by using a lower alcohol containing a certain amount of water, the polarity can be increased, and the removal efficiency for highly polar substances from the reclaimed white clay can be improved. Specifically, the purity of the lower alcohol used is preferably from 50 to 100%, more preferably from 50 to 96%, and still more preferably from 70 to 96%.

### [Combinations of the Methods for Producing Reclaimed White Clay according to the First, Second and Third Aspects]

By combining the methods for producing reclaimed white clay according to the first, second and third aspects of the present invention, a reclaimed white clay having a superior decolorizing function can be produced.

Specifically, in the reclamation step of the method for producing a reclaimed white clay according to the first aspect of the present invention, it is preferable that either a treatment in which a portion of the liquid component within the mixture is substituted with a lower alcohol, or a treatment in which additional lower alcohol is added to the mixture is performed once or a plurality of times, in a similar manner to that described in the method for producing a reclaimed white clay according to the second aspect of the present invention. Further, in the reclamation step of the method for producing a reclaimed white clay according to the first aspect of the present invention, it is preferable that, after the reclamation step, the reclaimed white clay, which is collected by a solid-liquid separation treatment from the mixture containing the obtained reclaimed white clay, is mixed with a lower alcohol to extract additional adsorbed components from the reclaimed white clay, in a similar manner to that described in the method for producing a reclaimed white clay according to the third aspect of the present invention.

In the method for producing a reclaimed white clay according to the second aspect of the present invention, it is preferable that, after the reclamation step, the reclaimed white clay, which is collected by a solid-liquid separation treatment from the mixture containing the obtained reclaimed white clay, is mixed with a lower alcohol to extract additional adsorbed components from the reclaimed white clay, in a similar manner to that described in the method for producing a reclaimed white clay according to the third aspect of the present invention.

### [Collection and Washing of Reclaimed White Clay]

In the methods for producing reclaimed white clay according to the first, second and third aspects of the present invention (hereafter also jointly referred to as "the method for producing a reclaimed white clay according to the present invention"), the reaction liquid obtained following the reclamation step (the extraction and esterification reaction) or the extraction step (extraction reaction) can be subjected to a solid-liquid separation, by a filtration method or the like, of the white clay that has undergone the reclamation step or the extraction step, and the acidic catalyst and the lower alcohol. As a result, a white clay having a reclaimed decolorizing function (a reclaimed white clay) can be separated as a solid. Moreover, the obtained reclaimed white clay can be reused, with no further modification, for decolorizing an oil or fat. Alternatively, the obtained reclaimed white clay may be subjected to a drying treatment or the like before being reused for decolorizing an oil or fat.

In other words, the methods for producing reclaimed white clay according to the first, second and third aspects of the present invention may include, after the reclamation step (the extraction and esterification reaction) or the extraction step (extraction reaction), a solid-liquid separation step for performing a solid-liquid separation of the reaction mixture obtained following the reclamation step or the extraction step, and may also include a drying treatment step for drying the reclaimed white clay obtained in the solid-liquid separation step.

The aforementioned filtration can employ a conventional method, and specific examples of methods that can be used include natural filtration, reduced pressure filtration, pressurized filtration and centrifugal filtration.

The aforementioned drying treatment can employ a conventional method, and specific examples of methods that can be used include heated drying methods using a heater or heat exchanger or the like, natural drying methods, hot air drying methods, reduced pressure drying methods, and methods using a desiccant.

Further, the separated reclaimed white clay may be washed with a solvent having a solubility parameter (SP value) of 7 to 15, either before or after the drying treatment.

As a result of this washing treatment, the extracted oil fraction and the products of the esterification reaction and the like that are adhered to the reclaimed white clay can be washed away and removed. In consideration of subsequent solvent separation, the solvent having an SP value of 7 to 15 (hereafter referred to as the "solvent for washing and removing the oil fraction") is preferably the lower alcohol used in the extraction and esterification reaction. On the other hand, in terms of achieving a more efficient removal of the residual oil fraction following the reclamation treatment, solvents having an SP value of 7 to 10 such as xylene, toluene, acetone and hexane, alcohols having an SP value of 11 to 15 such as isopropanol, ethanol and methanol, or mixtures of these solvents may also be used.

The mixture of the white clay, the acidic catalyst and the lower alcohol obtained after the reclamation step or the extraction step is filtered, and when the thus obtained reclaimed white clay is washed using 200 parts of water per 100 parts of the reclaimed white clay, the pH of the wash waste water is approximately 1 to 3, although this value varies depending on the amount and variety of the added acidic catalyst. Accordingly, when the method for producing a reclaimed white clay according to the present invention is performed in an industrial facility, the equipment such as the waste water pipes used for discharging the waste water generated by the washing treatment of the reclaimed white clay is restricted to equipment formed from materials having high acid resistance. Accordingly, in the method for producing a reclaimed white clay according to the present invention, the separated reclaimed white clay may be first neutralized, before being subjected to a washing treatment. This enables the pH of the discharged waste water to be increased. As a result, the range of materials that can be selected for the equipment such as the waste water pipes can be broadened.

However, in terms of the decolorizing function of the reclaimed white clay, a lower pH is preferable. Further, if the pH of the reclaimed white clay is increased, then when an acid catalyst is used in an extraction treatment, salts generated by neutralization of residual acid catalyst tend to adhere to the reclaimed white clay. Accordingly, in the present invention, it is preferable that following the reclamation step or the extraction step, an alkali is added to the reaction liquid to adjust the pH to a value from 3 to 8, preferably from 3.5 to 6, more preferably from 3.5 to 5.5, and still more preferably from 4 to 5, the reaction liquid is subsequently subjected to a solid-liquid separation, and the thus obtained solid (reclaimed white clay) is then subjected to a washing treatment using the aforementioned solvent for washing and removing the oil fraction. There are no particular limitations on the alkali used in the pH adjustment, and examples include sodium hydroxide and sodium carbonate.

Regardless of whether or not a neutralization treatment is performed, the amount of the solvent for washing and removing the oil fraction that is used for washing the reclaimed white clay is not particularly limited, but from the viewpoint of the economic viability of the liquid waste treatment, the amount of the solvent used per single washing treatment is preferably not more than 1,000 parts by mass, more preferably from 10 to 1,000 parts by mass, still more preferably from 50 to 1,000 parts by mass, and particularly preferably from 100 to 1,000 parts by mass, per 100 parts by mass of the reclaimed white clay undergoing washing (namely, per 100 parts by mass of the waste white clay supplied to the reclamation). Further, there are no particular limitations on the number of washing treatment repetitions, and for example when using the amount of solvent described above, the washing treatment is typically performed 1 to 10 times, preferably 1 to 5 times, more preferably 1 to 4 times, and still more preferably 1 to 3 times.

Further, the temperature at which the washing treatment for the reclaimed white clay is performed with the aim of washing and removing the oil fraction is not particularly limited, provided the temperature is not higher than the boiling point of the solvent used for washing and removing the oil fraction. Specifically, the washing treatment may be performed at a temperature of 0 to 200°C. When a neutralization treatment is not performed, a temperature adjustment is not required, and therefore performing the washing treatment at normal temperature is also preferable. When a neutralization treatment is performed, the washing treatment is preferably performed at a temperature higher than normal temperature, such as a temperature of 40 to 60°C.

Following washing with the solvent used for washing and removing the oil fraction, the reclaimed white clay may be dried without further treatment, or may be further washed with water or the like and then dried.

When a neutralization treatment is performed, salts generated as a result of the neutralization adhere to the reclaimed white clay, and therefore a treatment for removing these salts from the reclaimed white clay is preferably performed after the washing treatment with the solvent used for washing and removing the oil fraction. Specifically, following the washing treatment with the solvent used for washing and removing the oil fraction, the reclaimed white clay is washed with a solution (washing liquid) such as water capable of dissolving the salts. There are no particular limitations on the amount of the washing liquid used in a single wash, the number of washing repetitions performed, or the temperature during the washing treatment. Although the amount of waste water and the like increases as the amount of the washing liquid is increased or the number of washing repetitions is increased, a reclaimed white clay having a superior decolorizing function can be obtained. The washing temperature can be adjusted appropriately in accordance with the solubility in the washing liquid of the salts generated by the neutralization. For example, when removing salts such as sodium sulfate for which the solubility peak is at 34.38°C, or salts such as cerium sulfate which exhibit excellent solubility at low temperatures near 0°C, and for which the solubility tends to decrease with increasing temperature, the washing is preferably performed at a temperature at which the solubility of these salts is sufficiently high. Further, for many salts, the solubility tends to increase at temperatures higher than normal temperature, and in such cases, the washing is preferably performed at a temperature higher than normal temperature.

### [Decolorizing Function of Reclaimed White Clay]

The difference between the L* value in the CIELab method of an oil or fat that has been refined using the white clay with a reclaimed decolorizing function produced using the method for producing a reclaimed white clay according to the present invention, and the L* value in the CIELab method of an oil or fat that has been refined under the same conditions with the exception of replacing the reclaimed white clay with an unused white clay is preferably at least 0 but not more than 2, more preferably at least 0 but not more than 1.6, still more preferably at least 0 but not more than 0.8, and most preferably at least 0 but not more than 0.4.

Here, the "L* value in the CIELab method" is a value that indicates the lightness of a target object, wherein a larger value means a higher lightness value. In other words, a difference in the L* values of not more than 2 means that even when the reclaimed white clay is used, a level of decolorization of the oil or fat that is similar to that observed for the unused white clay can be achieved.

All of the L* values in the aforementioned CIELab method represent values measured using a spectroscopic colorimeter SD5000 (product name, manufactured by Nippon Denshoku Industries Co., Ltd., glass cell, optical path length: 10 mm).

Various types of white clay exist, but when comparing the difference in L* values for an oil or fat, the comparison is performed using an oil or fat that has been refined using the same type of white clay (and preferably the same white clay), with the only difference being whether or not the clay has been subjected to a reclamation treatment using the method for producing a reclaimed white clay according to the present invention. This also applies to the comparison of Y values described below.

More specifically, when 100 g of a soybean oil which has been subjected to acid removal by a typical deacidification step and has an L* value in the CIELab method of 90 is decolorized using 1 g of an unused white clay, the L* value in the CIELab method of the resulting decolorized soybean oil is from 98.5 to 99. On the other hand, when 100 g of the soybean oil which has been subjected to the same deacidification step is decolorized using 1 g of a white clay for which the decolorizing function has been reclaimed in the manner described above, the L* value in the CIELab method of the obtained decolorized soybean oil is from 97 to 99.

Furthermore, the Y value in a Lovibond colorimeter (cell length: 5.25 inches) (product name: model E, manufactured by the Tintometer Ltd.) of an oil or fat that has been refined using the white clay with a reclaimed decolorizing function producing by the method for producing a reclaimed white clay according to the present invention is smaller than the Y value of the oil or fat prior to refining, and is similar to the Y value of the oil or fat that has been refined under the same conditions with the exception of replacing the reclaimed white clay with an unused white clay.

The "Y value in a Lovibond colorimeter" is a value that indicates the intensity of the yellow color of a target object, wherein a smaller value means a color closer to colorless.

In the present invention, the difference between the Y values in the aforementioned Lovibond colorimeter of an oil or fat that has been refined using the reclaimed white clay, and an oil or fat that has been refined under the same conditions with the exception of replacing the reclaimed white clay with an unused white clay is preferably at least 0 but not more than 25, more preferably at least 0 but not more than 21, still more preferably at least 0 but not more than 12, and most preferably at least 0 but not more than 5.

### [Esters and the like]

Further, the liquid portion separated from the reaction liquid by solid-liquid separation following the reclamation step or the extraction step contains esters of the oils or fats and/or free fatty acids and the lower alcohol, glycerol which is formed as a reaction by-product, the acidic catalyst, and in some cases very small amounts of free fatty acids and glycerol fatty acid esters. By removing the acidic catalyst (such as sulfuric acid) from the obtained liquid portion by conventional methods such as neutralization, water washing or adsorption, the remaining reaction liquid can be used as a fuel. Following removal of the acidic catalyst (such as sulfuric acid), the reaction liquid contains mainly esters of the lower alcohol, and therefore the liquid has a low viscosity and can be used favorably as a fuel.

Furthermore, the esters obtained from the esterification reaction between the oil or fat and the lower alcohol in the method for producing a reclaimed white clay according to the present invention can be used as a fuel or the like. For example, in the method for producing a reclaimed white clay of the present invention, by using a lower alcohol with a high purity as the lower alcohol used in the extraction of the oily component, the acid value of the obtained esters can be restricted to at least 0 but not more than 10. Esters of this type in which the obtained acid value has been restricted to at least 0 but not more than 10 can be used as biofuels or the like.

### [Reclaimed White Clay]

The reclaimed white clay of the present invention is a reclaimed white clay produced by the method for producing a reclaimed white clay according to the present invention, and this reclaimed white clay can be reused for decolorizing an oil or fat. Further, a reclaimed white clay that has been used in decolorizing an oil or fat can once again be subjected to reclamation of the decolorizing function using the method for producing a reclaimed white clay of the present invention, and therefore reclamation of the decolorizing function and use of the reclaimed white clay in the decolorizing of an oil or fat can be performed repeatedly.

There are no particular limitations on the number of repetitions possible for the reclamation of the decolorizing function, and for example, by using the method for producing a reclaimed white clay according to the present invention, reclamation of the waste white clay and subsequent use of the reclaimed white clay for decolorizing an oil or fat may be repeated 1 to 20 times, preferably 1 to 10 times, still more preferably 1 to 5 times, and particularly preferably 1 to 3 times.

### [Method for Producing Refined Oil or Fat]

The method for producing a refined oil or fat according to the present invention includes a step of decolorizing the oil or fat (hereafter referred to as a "decolorizing step") using the reclaimed white clay described above.

The oil or fat used in the decolorizing step is preferably the same as the oil or fat in the invention described above, and is preferably an oil or fat from which free acid and impurities have been removed in advance by a deacidification step.

There are no particular limitations on the method used for decolorizing the oil or fat in the decolorizing step, and in one example, the oil or fat and the white clay are brought into contact and stirred to decolorize the oil or fat.

If required, the decolorized oil or fat obtained in the decolorizing step may be further subjected to a dewaxing step or a deodorizing step to produce the refined oil or fat. There are no particular limitations on the methods used for the dewaxing step or the deodorizing step, and the types of methods typically used in producing edible oils can be used.

### EXAMPLES

The present invention is described below in further detail using a series of examples and the like, but the present invention is in no way limited by these examples.

### [Reference Example 1]

The proportion of the lower alcohol used relative to the waste white clay was varied, and the amount of fatty acid esters of the lower alcohol, the amount of oil or fat extracted, and the decolorizing function of the obtained reclaimed white clay were investigated.

### «Conditions 1»

First, a four-necked flask was fitted with a stirrer (Power Stirrer AMGH (product name), manufactured by Asahi Rika Sesisakusho K.K.), a thermometer holder, and a glass cover. Subsequently, a waste white clay that had been obtained in the decolorizing step for a deacidified soybean oil (Galleon Earth (product name), manufactured by Mizusawa Industrial Chemicals, Ltd., that had been used in the decolorizing step) was ground uniformly in a mortar, and 75 g of the waste white clay, 75 g of methanol and 1.5 g of sulfuric acid were added to the flask.

A Dimroth condenser was connected to the flask, stirring was performed with the flask placed in a water bath set to a temperature of 75°C, and the point at which reflux of the methanol was confirmed was deemed the reaction start time. The stirring speed was set to level 3.5 on the stirrer scale, and the reaction time was set to 4 hours. One hour after the start of the reaction, and subsequently at one hour intervals for a total of 4 times, a sample was taken for gas chromatography.

Following completion of the reaction, a round bottom flask and a Buchner funnel, the weights of which had been measured in advance, were used to separate the reaction liquid into a solid portion and a liquid portion. During the separation, methanol was used to wash the inside of the four-necked flask and the perforated plate of the Buchner funnel, and the washing was continued until the liquid portion draining from the solid portion was transparent. Subsequently, the funnel and the four-necked flask were left to stand for one hour inside a thermostatic chamber at 80°C to evaporate the methanol, and the weight of the residual solid portion was measured. Further, the contents of the round bottom flask were also subjected to evaporation, and the weight of the liquid portion remaining after removal of the methanol was measured. The results are shown in Table 1.

### <<Conditions 2>>

With the exception of using 15 g of the waste white clay, 135 g of methanol and 1.5 g of sulfuric acid, reaction was performed in the same manner as that described above for Conditions 1, while samples were removed for gas chromatography, thus yielding a solid portion and a liquid portion. The weights of the solid portion and the liquid portion are shown in Table 1.

**[Table 1]**

| Table 1 | Solid portion weight | Liquid portion weight | Total weight |
|---|---|---|---|
| Conditions 1 | 52.51 g | 15.7 g | 68.24 g |
| Conditions 2 | 9.34 g | 9.49 g | 18.83 g |

### (Gas Chromatography Analysis)

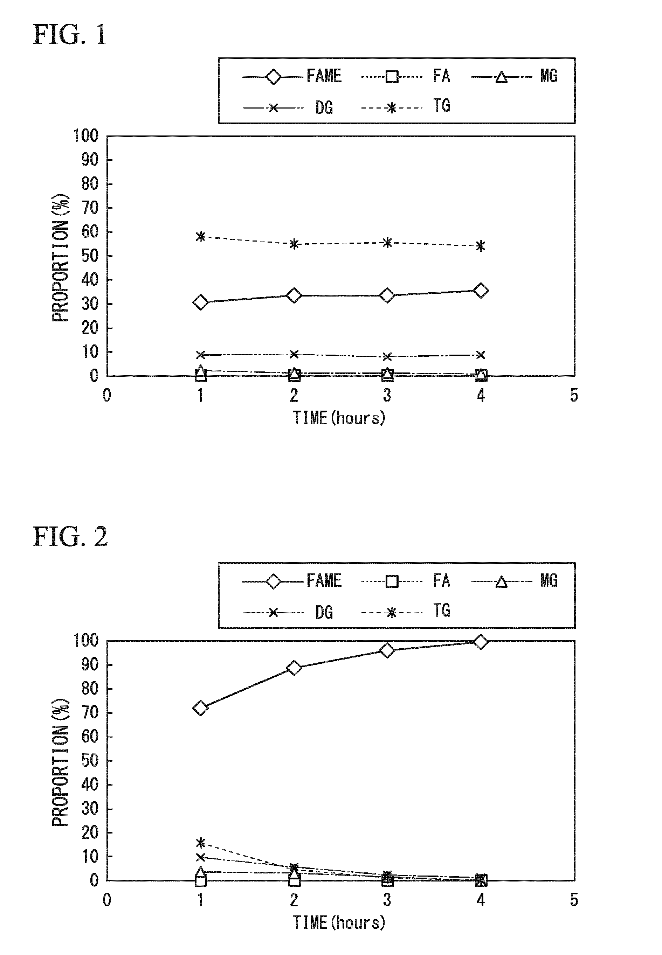

Of the gas chromatography samples collected during the reactions, approximately 30 mg of each sample collected under Conditions 1, and approximately 200 g of each sample collected under Conditions 2 were each transferred to a test tube with a screw cap. To each sample were added 1 mL of hexane and 2 mL of a saturated saline solution, and following mixing, centrifugal separation was performed to separate the sample into two layers. The hexane layer was transferred to a sample vial and used as a gas chromatography sample. Using this sample, gas chromatography was performed under the conditions described below, the resulting peaks were classified into fatty acid methyl esters (FAME), free fatty acids (FA), monoglycerides (MG), diglycerides (DG) and triglycerides (TG), and the compositional ratio of each category was calculated from the ratio of the peak surface area relative to the total peak surface area. The results for Conditions 1 are shown in Table 2 and FIG. 1, and the results for Conditions 2 are shown in Table 3 and FIG. 2.

Column: DB-5ht (15 m) (manufactured by Agilent Technologies, Inc.)
Carriers: helium, hydrogen
Helium flow rate: 50 mL/minute
Hydrogen flow rate: 50 mL/minute
Air flow rate: 500 mL/minute
Gasification chamber temperature: 300°C
Detector temperature: 350°C
Temperature conditions: 100°C (1 minute) → temperature increase at 10°C/minute → 350°C (20 minutes)
Injection volume: 1 µL
Split ratio: 50

**[Table 2]**

| Conditions 1 | after 1 hour | after 2 hours | after 3 hours | after 4 hours |
|---|---|---|---|---|
| FAME | 31.5 | 34.1 | 34.8 | 36.3 |
| FA | 0 | 0 | 0 | 0 |
| MG | 1.8 | 1.4 | 1.1 | 0.9 |
| DG | 8.6 | 8.6 | 8.4 | 8.3 |
| TG | 58.0 | 55.9 | 55.7 | 54.5 |
| Total | 100 | 100 | 100 | 100 |

**[Table 3]**

| Conditions 2 | after 1 hour | after 2 hours | after 3 hours | after 4 hours |
|---|---|---|---|---|
| FAME | 70.8 | 86.4 | 94.6 | 97.7 |
| FA | 0 | 0 | 0 | 0 |
| MG | 4.1 | 3.2 | 1.6 | 0.7 |
| DG | 10.2 | 5.8 | 2.7 | 1.4 |
| TG | 15.0 | 4.6 | 1.2 | 0.3 |
| Total | 100 | 100 | 100 | 100 |

In the results shown in FIGS. 1 and 2 and Tables 2 and 3, no free fatty acid was detected under both Conditions 1 and 2. It is thought that the free fatty acid which decomposed during the reaction was essentially entirely converted to the equivalent methyl ester.

Further, under Conditions 1, the proportion of triglycerides decreased as time progressed, and a corresponding increase was observed in the proportion of fatty acid methyl esters (FAME). Under Conditions 2, the triglycerides (TG), the diglycerides (DG) and the monoglycerides (MG) all decomposed and decreased in quantity as time progressed, and the proportion of fatty acid methyl esters (FAME) increased.

### (Regarding Amount of Extracted Oil or Fat)

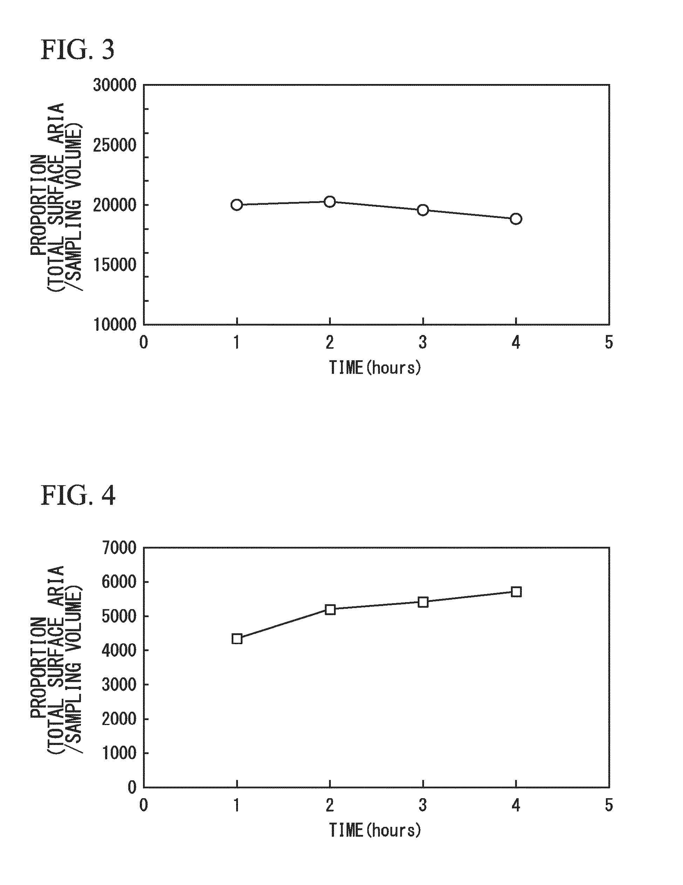

The amount of extracted oil or fat was calculated by dividing the total peak surface area obtained from the above gas chromatography analysis chart by the sampling volume. The results are shown in FIG. 3 (Conditions 1) and FIG. 4 (Conditions 2).

From the results shown in FIG. 3 and FIG. 4, it is evident that the amount of extracted oil or fat did not change with the progression of time under Conditions 1, whereas the amount of extracted oil or fat increased with the progression of time under Conditions 2. Under Conditions 2, by setting the extraction time longer, there is a possibility to further increase the amount of extracted oil or fat.

### (Regarding the Decolorizing Function of the Reclaimed White Clay)

Using the solid portion (reclaimed white clay) obtained in the manner described above, the decolorizing function of the reclaimed white clay was investigated.

Specifically, a stirring rod, a stirrer and a thermometer holder were fitted to a four-necked flask, and 100 g of a deacidified soybean oil was added to the flask. With the soybean oil undergoing stirring with the stirrer, 1 g of either the reclaimed white clay obtained under Conditions 1 or Conditions 2, or an unused white clay (Galleon Earth (product name), manufactured by Mizusawa Industrial Chemicals, Ltd.) was added to the flask, and a decolorizing reaction was performed under reduced pressure at 105°C for one hour. The unused white clay was white, the reclaimed white clay obtained under Conditions 1 was a dark grey color, and the reclaimed white clay obtained under Conditions 2 was a light grey color, whereas the used white clays prior to reclamation were black. Comparing the reclaimed white clay from Conditions 1 and the reclaimed white clay from Conditions 2, the reclaimed white clay from Conditions 1 exhibited a heavier contact. It is thought that this is because the reclaimed white clay from Conditions 1 had a larger residual oily component retained inside the clay.

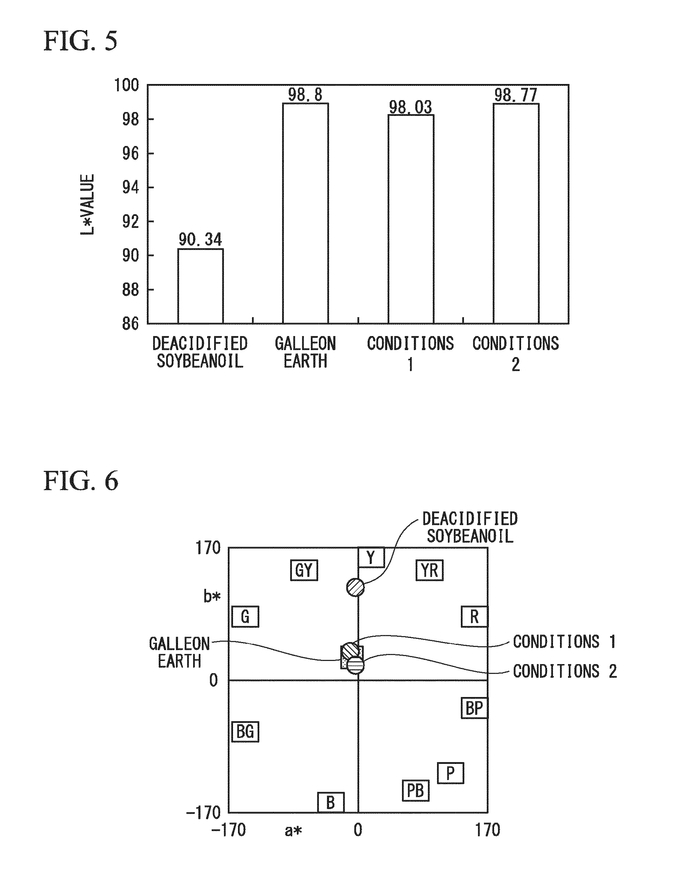

Subsequently, the oil was extracted by filtration, and a spectroscopic colorimeter SD5000 (product name, manufactured by Nippon Denshoku Industries Co., Ltd., glass cell, optical path length: 10 mm) was used to measure the color of the obtained oil under CIELab evaluation standards. The results of the color measurements are shown in FIG. 5 (L* values) and FIG. 6 (a* values and b* values).

First, in terms of the external appearance of the oil before and after the decolorizing step, the oil was an amber color before the decolorizing step, whereas after the decolorizing step using the reclaimed white clay from Conditions 1 or 2 or the unused white clay, the oil was a yellow color. However, comparing the oils of Conditions 1 and Conditions 2, the oil from Conditions 1 had a slight red tinge.

Next, the results for the L* values from the CIELab method revealed an L* value of 90.34 for the oil prior to decolorizing (the deacidified soybean oil), an L* value of 98.8 for the oil after decolorizing using the unused white clay (Galleon Earth (product name), manufactured by Mizusawa Industrial Chemicals, Ltd.), an L* value of 98.03 for the oil after decolorizing using the reclaimed white clay from Conditions 1, and an L* value of 98.77 for the oil after decolorizing using the reclaimed white clay from Conditions 2, confirming that when the reclaimed white clay of Conditions 1 or 2 was used, the lightness of the obtained decolorized oil increased by a similar amount to that observed when the unused white clay was used.

Moreover, the results for the CIELab a* values and b* values confirmed that when the reclaimed white clay of Conditions 1 or 2 was used, the hue and saturation of the decolorized oil were similar to those observed when the unused white clay was used.

### [Reference Example 2]

The proportion of the lower alcohol used relative to the waste white clay was varied, and the amount of fatty acid esters of the lower alcohol was investigated.

«Conditions 1 to 4»

Under Conditions 2 to 4, with the exceptions of using the amounts of waste white clay, ethanol (purity: at least 99.5%) and sulfuric acid shown in Table 4, reaction was performed in the same manner as that described above in the aforementioned Conditions 1, while samples were removed for gas chromatography, and the weights of the resulting solid portion and liquid portion were then measured. The results are shown in Table 4.

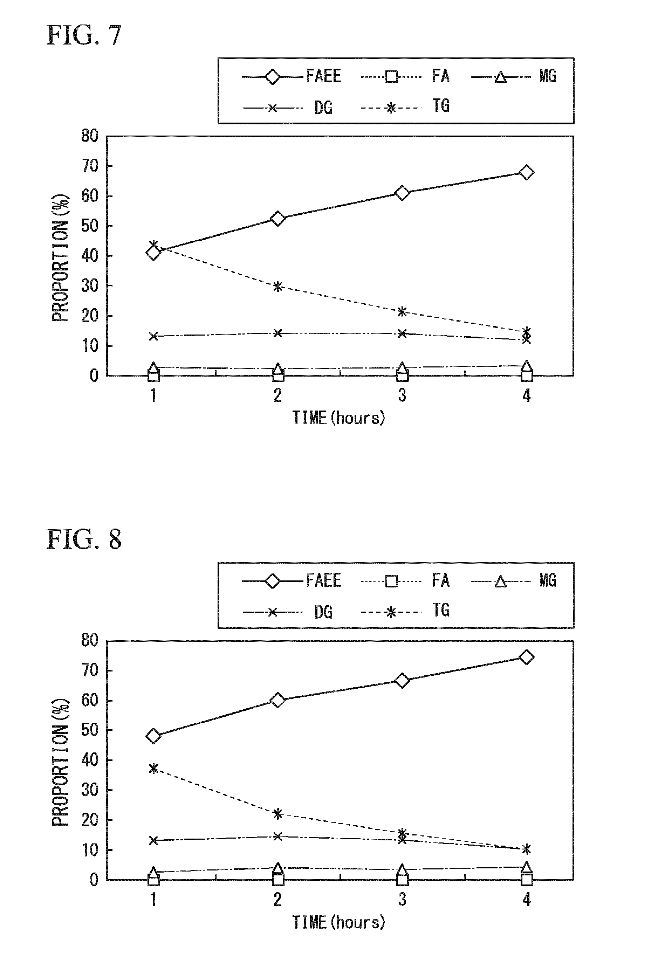

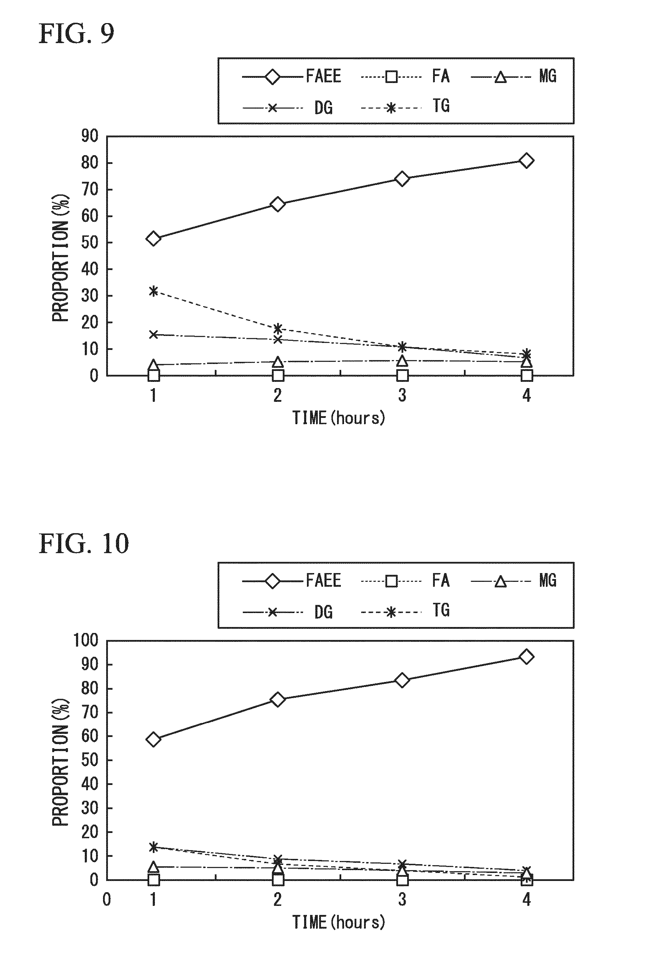

The peaks obtained by gas chromatography were classified into fatty acid ethyl esters (FAEE), free fatty acids (FA), monoglycerides (MG), diglycerides (DG) and triglycerides (TG), and the compositional ratio of each category was calculated from the ratio of the peak surface area relative to the total peak surface area. The results for Conditions 1 are shown in Table 5 and FIG. 7, the results for Conditions 2 are shown in Table 6 and FIG. 8, the results for Conditions 3 are shown in Table 7 and FIG. 9, and the results for Conditions 4 are shown in Table 8 and FIG. 10.

**[Table 4]**

| Table 4 | Amount added | | | Weight | | |
|---|---|---|---|---|---|---|
| | Waste white clay | Ethanol | Sulfuric acid | Solid portion weight | Liquid portion weight | Total weight |
| Conditions 1 | 75.0 | 75.2 | 1.5 | 47.96 | 28.47 | 76.43 |
| Conditions 2 | 50.0 | 100.3 | 1.5 | 31.73 | 20.08 | 51.81 |
| Conditions 3 | 30.0 | 120.1 | 1.5 | 19.05 | 13.42 | 32.47 |
| Conditions 4 | 15.0 | 135.1 | 1.5 | 10.36 | 8.53 | 18.89 |

**[Table 5]**

| Conditions 1 | after 1 hour | after 2 hours | after 3 hours | after 4 hours |
|---|---|---|---|---|
| FAEE | 41.8 | 53.4 | 60.8 | 68.1 |
| FA | 0 | 0 | 0 | 0 |
| MG | 1.9 | 2.4 | 2.9 | 3.2 |
| DG | 13.4 | 14.9 | 14.2 | 12.7 |
| TG | 42.9 | 29.4 | 22.0 | 15.9 |
| Total | 100 | 100 | 100 | 100 |

**[Table 6]**

| Conditions 2 | after 1 hour | after 2 hours | after 3 hours | after 4 hours |
|---|---|---|---|---|
| FAEE | 47.5 | 60.3 | 66.4 | 73.9 |
| FA | 0 | 0 | 0 | 0 |
| MG | 2.3 | 3.4 | 3.9 | 4.0 |
| DG | 14.4 | 14.6 | 13.5 | 11.3 |
| TG | 35.8 | 21.6 | 16.2 | 10.8 |
| Total | 100 | 100 | 100 | 100 |

**[Table 7]**

| Conditions 3 | after 1 hour | after 2 hours | after 3 hours | after 4 hours |
|---|---|---|---|---|
| FAEE | 51.9 | 65.3 | 74.4 | 80.5 |
| FA | 0 | 0 | 0 | 0 |
| MG | 3.5 | 4.8 | 5.0 | 4.7 |
| DG | 14.2 | 12.9 | 10.2 | 8.0 |
| TG | 30.4 | 17.0 | 10.4 | 6.9 |
| Total | 100 | 100 | 100 | 100 |

**[Table 8]**

| Conditions 4 | after 1 hour | after 2 hours | after 3 hours | after 4 hours |
|---|---|---|---|---|
| FAEE | 67.1 | 79.0 | 85.0 | 90.1 |
| FA | 0 | 0 | 0 | 0 |
| MG | 5.3 | 4.8 | 4.0 | 3.0 |
| DG | 13.4 | 9.2 | 6.8 | 4.7 |
| TG | 14.2 | 7.0 | 4.2 | 2.3 |
| Total | 100 | 100 | 100 | 100 |

In the results shown in FIGS. 7 to 10 and Tables 5 to 8, no free fatty acid was detected under any of Conditions 1 to 4. It is thought that the free fatty acid which decomposed during the reaction was essentially entirely converted to the equivalent ethyl ester.

Further, under Conditions 1 to 3, the proportion of triglycerides decreased as time progressed, and a corresponding increase was observed in the proportion of fatty acid ethyl esters (FAME). Under Conditions 4, the triglycerides (TG), the diglycerides (DG) and the monoglycerides (MG) all decomposed and decreased in quantity as time progressed, and the proportion of fatty acid ethyl esters (FAEE) increased. It was found that as the proportion of added ethanol increased, the proportion of obtained fatty acid ethyl esters tended to increase.

### [Reference Example 3]

Using ethanol as the lower alcohol, investigations were performed on the effects of the amount of the lower alcohol used relative to the waste white clay, and the reaction time.

First, a four-necked flask was fitted with a stirrer (Power Stirrer AMGH (product name), manufactured by Asahi Rika Sesisakusho K.K.), a thermometer holder, and a glass cover. Subsequently, a waste white clay that had been obtained in the decolorizing step for a deacidified soybean oil (Galleon Earth (product name), manufactured by Mizusawa Industrial Chemicals, Ltd., that had been used in the decolorizing step) was ground uniformly in a mortar. The water content of the uniform waste white clay was 6.8%, and the oil fraction obtained by the Soxhlet extraction method (ether) was 28.3%.

The flask was charged with the amounts of waste white clay, ethanol (purity: at least 99.5%) and sulfuric acid shown in Table 9, a Dimroth condenser was connected to the flask, stirring was performed with the flask placed in an oil bath set to a temperature of 85°C, and the point at which reflux of the ethanol was confirmed was deemed the reaction start time. The stirring speed was set to level 2 on the stirrer scale of the Power Stirrer (product name: AMG-H, manufactured by Asahi Rika Sesisakusho K.K.), and the reaction time was set to 8 hours. Two hours after the start of the reaction, and subsequently at two hour intervals for a total of 4 times, a sample was taken for gas chromatography.

Following completion of the reaction, a round bottom flask and a Buchner funnel, the weights of which had been measured in advance, were used to separate the reaction liquid into a solid portion and a liquid portion. During the separation, ethanol was used to wash the inside of the four-necked flask and the perforated plate of the Buchner funnel, and the washing was continued until the liquid portion draining from the solid portion was transparent. Subsequently, the funnel and the four-necked flask were left to stand for one hour inside a thermostatic chamber at 100°C to evaporate the ethanol, and the weight of the residual solid portion was measured. Further, the contents of the round bottom flask were also subjected to evaporation, and the weight of the liquid portion remaining after removal of the ethanol was measured. The results are shown in Table 9.

**[Table 9]**

| Table 9 | Amount added | | | Weight | | |
|---|---|---|---|---|---|---|
| | Waste white clay | Ethanol | Sulfuric acid | Solid portion weight | Liquid portion weight | Total weight |
| Conditions 1 | 75.02 | 75.04 | 1.5 | 49.35 | 28.97 | 78.32 |
| Conditions 2 | 50.0 | 100.31 | 1.5 | 32.4 | 20.5 | 52.9 |

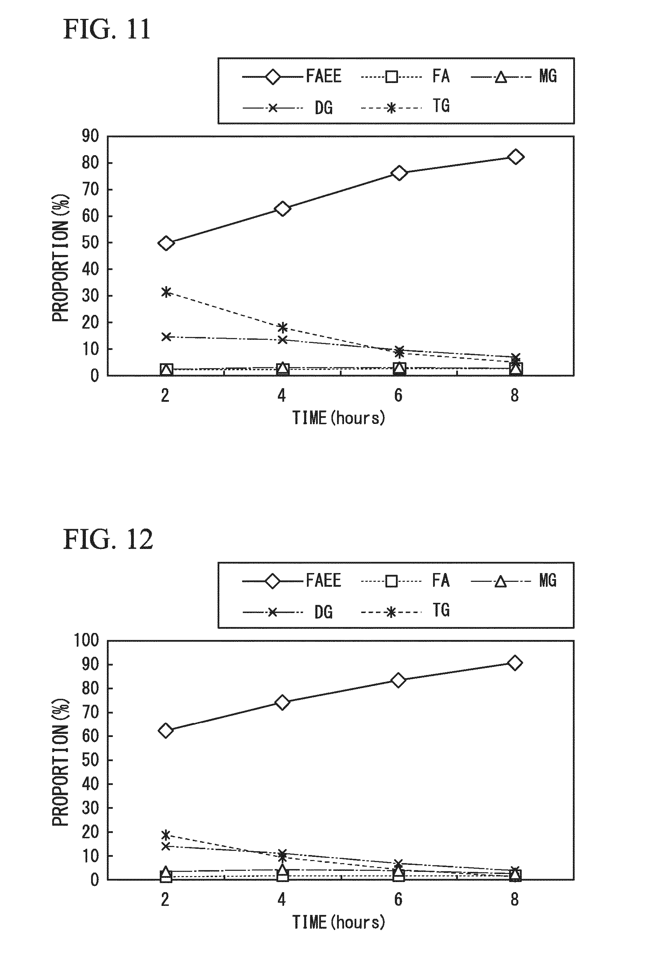

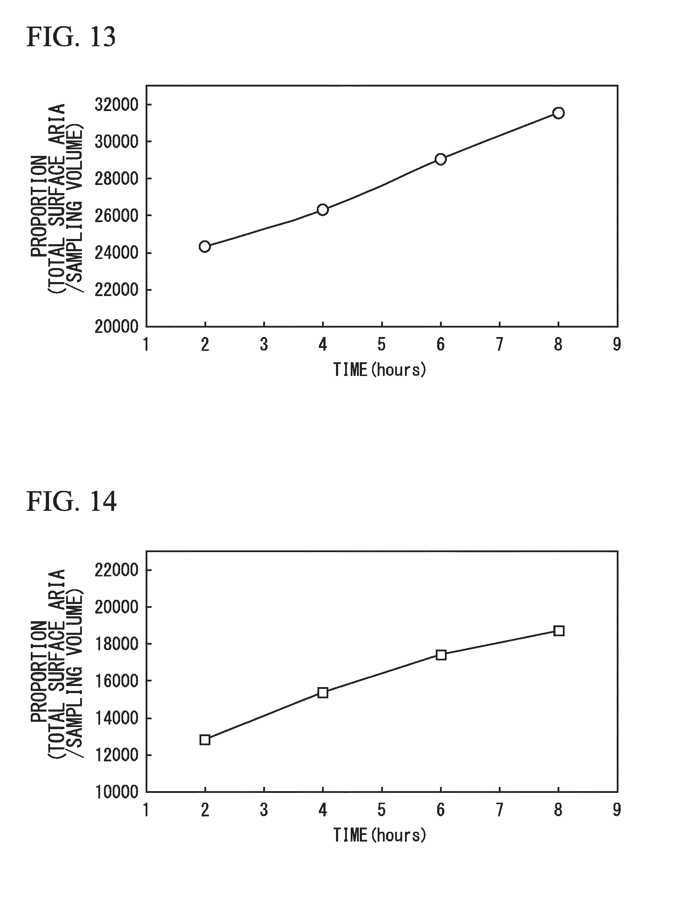

The peaks obtained by gas chromatography were classified into fatty acid ethyl esters (FAEE), free fatty acids (FA), monoglycerides (MG), diglycerides (DG) and triglycerides (TG), and the compositional ratio of each category was calculated from the ratio of the peak surface area relative to the total peak surface area. Further, the amount of extracted oil or fat was calculated by dividing the total peak surface area for FA, FAEE, MG, DG and TG obtained from the above gas chromatography chart by the sampling volume. The results for Conditions 1 are shown in FIG. 11 and FIG. 13, and the results for Conditions 2 are shown in FIG. 12 and FIG. 14.

The results confirmed that under both Conditions 1 and Conditions 2, almost all the TG had decomposed by 8 hours after the start of the reaction, with FAEE representing the vast majority of the sample. Further, the amount of extracted oil or fat increased as time progressed under both Conditions 1 and 2. Accordingly, by further extending the time of the reflux reaction (esterification reaction), there is a possibility to further increase the amount of extracted oil or fat.

Using the solid portion (reclaimed white clay) obtained in the manner described above, the decolorizing function of the reclaimed white clay was investigated.

Specifically, a stirring rod, a stirrer and a thermometer holder were fitted to a four-necked flask, and 100 g of a deaciditied soybean oil was added to the flask. With the soybean oil undergoing stirring with the stirrer, the flask was heated to 100°C in an oil bath, and when the temperature in the flask reached 100°C, 1 g (1%) of either the reclaimed white clay obtained under Conditions 1 or Conditions 2, or an unused white clay (Galleon Earth (product name), manufactured by Mizusawa Industrial Chemicals, Ltd.) was added to the flask, and the temperature was then raised to 105°C. After the temperature had reached 105°C, a depressurization was performed for 30 minutes. After 30 minutes, the pressure was returned to normal pressure, the flask contents were cooled to 85°C under stirring, and a filtration was performed to separate the white clay. Following filtration, the oil was subjected to an external appearance inspection and a color measurement in the same manner as described for Reference Example 1.

The external appearance inspection revealed that, following the decolorizing treatment, although the reclaimed white clay obtained under Conditions 1 or the reclaimed white clay obtained under Conditions 2 had a slightly redder color than the unused white clay following the decolorizing treatment, there was almost no difference between the three samples. Further, in this reference example, unlike Reference Example 2, the time of the reflux reaction (esterification reaction) was extended from 4 hours to 8 hours, but no significant increase in the degree of reclamation of the waste white clay was observed.

Next, the results for the CIELab L* values revealed an L* value of 90.34 for the oil prior to decolorizing (the deacidified soybean oil), an L* value of 98.44 for the oil after decolorizing using the unused white clay (Galleon Earth (product name), manufactured by Mizusawa Industrial Chemicals, Ltd.), an L* value of 98.11 for the oil after decolorizing using the reclaimed white clay from Conditions 1, and an L* value of 98.06 for the oil after decolorizing using the reclaimed white clay from Conditions 2, confirming that when the reclaimed white clay of Conditions 1 or 2 was used, the lightness of the obtained decolorized oil increased by a similar amount to that observed when the unused white clay was used.

### [Reference Example 4]

Using ethanol as the lower alcohol, investigations were performed on the effects of the amounts used of the lower alcohol and the acid catalyst relative to the waste white clay.

With the exceptions of using the amounts of the waste white clay, ethanol (purity: at least 99.5%) and sulfuric acid shown in Table 10, reaction was performed in the same manner as that described above for Conditions 1 of Reference Example 3, while samples were removed for gas chromatography, and the weights of the resulting solid portion and liquid portion were then measured.

**[Table 10]**

| Table 10 | Amount added | | |
|---|---|---|---|
| | Waste white clay | Ethanol | Sulfuric acid |
| Conditions 1 | 75.02 | 75.08 | 7.53 |
| Conditions 2 | 50.01 | 100.18 | 7.5 |

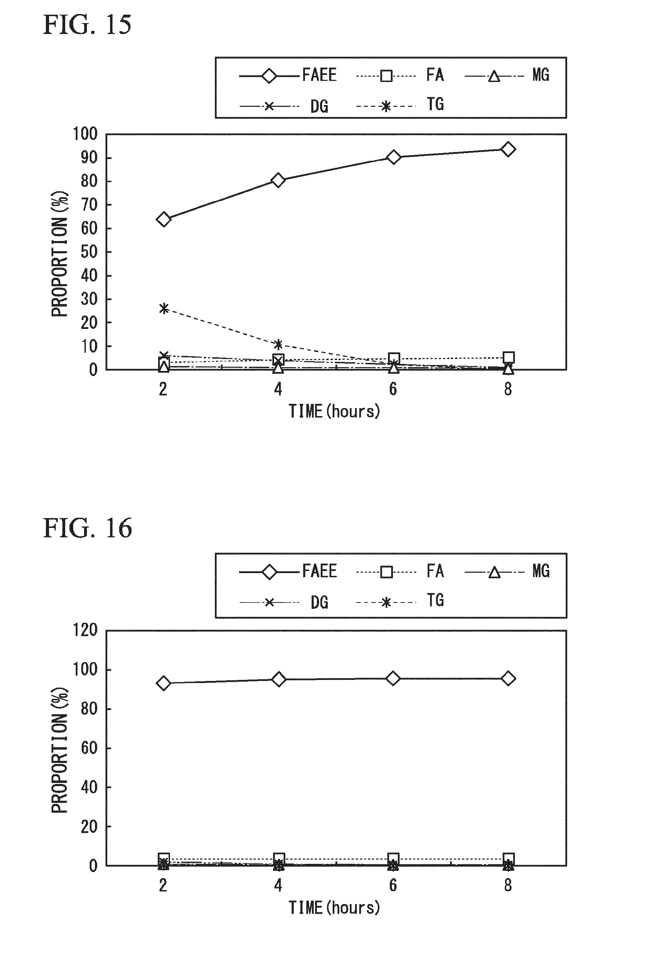

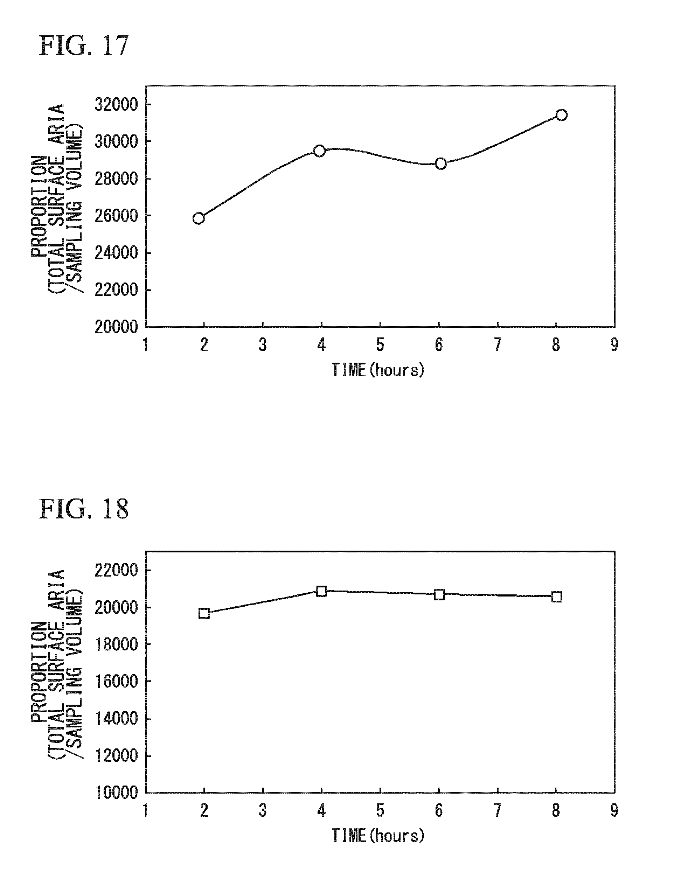

The peaks obtained by gas chromatography were classified into fatty acid ethyl esters (FAEE), free fatty acids (FA), monoglycerides (MG), diglycerides (DG) and triglycerides (TG), and the compositional ratio of each category was calculated from the ratio of the peak surface area relative to the total peak surface area. Further, the amount of extracted oil or fat was calculated by dividing the total peak surface area for FA, FAEE, MG, DG and TG obtained from the above gas chromatography chart by the sampling volume. The results for Conditions 1 are shown in FIG. 15 and FIG. 17, and the results for Conditions 2 are shown in FIG. 16 and FIG. 18.

These results revealed that under Conditions 1, the proportion of FAEE increased in a time-dependent manner relative to the time of the reflux reaction (esterification reaction), whereas the proportions of TG, DG and MG decreased. Further, under Conditions 2, the proportion of each of the components remained substantially flat from 2 hours after the start of the reaction, but a slight reduction in the proportion of DG was observed.

Further, in terms of the amount of oil or fat extracted, under Conditions 1, an increasing trend was observed over time despite the shape of the curve being somewhat distorted. Further, under Conditions 2, the amount of oil or fat extracted remained substantially flat from 2 hours after the start of the reaction. These results indicated that under Conditions 1, extraction of the oil or fat was still continuing even after 8 hours of the reflux reaction, whereas under Conditions 2, extraction of the oil or fat had been completed by approximately 4 hours after the start of the reaction.

Using the solid portion (reclaimed white clay) obtained in the manner described above, the decolorizing function of the reclaimed white clay was investigated in the same manner as that described for Reference Example 3.

The results revealed that, upon inspection of the external appearance, the decolorizing function of the reclaimed white clay obtained under Conditions 1 was slightly superior to that of the reclaimed white clay obtained under Conditions 1 in Reference Example 3, but inferior to that of the unused white clay. On the other hand, the decolorizing function of the reclaimed white clay obtained under Conditions 2 yielded a decolorizing performance that was visually substantially the same as that of the unused white clay.

Next, the results for the CIELab L* values revealed an L* value of 90.34 for the oil prior to decolorizing (the deacidified soybean oil), an L* value of 99.05 for the oil after decolorizing using the unused white clay, an L* value of 98.67 for the oil after decolorizing using the reclaimed white clay from Conditions 1, and an L* value of 99.28 for the oil after decolorizing using the reclaimed white clay from Conditions 2, confirming that when the reclaimed white clay of Conditions 1 or 2 was used, the lightness of the obtained decolorized oil increased by a similar amount to that observed when the unused white clay was used.

### [Reference Example 5]

Investigations were performed to ascertain how the decolorizing function of the obtained reclaimed white clay changed upon differences in the treatment conditions for the waste white clay.

### «Conditions 1»

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 50 g of a waste white clay that had been obtained in the decolorizing step for a deacidified soybean oil (Galleon Earth (product name), manufactured by Mizusawa Industrial Chemicals, Ltd., that had been used in the decolorizing step), 100 g of 95% ethanol and 4.5 g of sulfuric acid were added to the flask.

A Dimroth condenser was connected to the flask, stirring was performed with the flask placed in an oil bath set to a temperature of 85°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, the solid portion and the liquid portion were separated using a Buchner funnel. During the separation, ethanol (approximately 70 mL) was used to wash the inside of the four-necked flask and the perforated plate of the Buchner funnel. Subsequently, the funnel was left to stand for 4 hours inside a thermostatic chamber at 110°C to evaporate the ethanol, and the thus obtained solid portion was collected.

### «Conditions 2»

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 25 g of a waste white clay that had been obtained in the decolorizing step for a deacidified soybean oil (Galleon Earth (product name), manufactured by Mizusawa Industrial Chemicals, Ltd., that had been used in the decolorizing step), 125 g of 99.5% ethanol and 4.5 g of sulfuric acid were added to the flask.

A Dimroth condenser was connected to the flask, stirring was performed with the flask placed in an oil bath set to a temperature of 85°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and the reaction time was set to 4 hours.

Following completion of the reaction, the solid portion and the liquid portion were separated using a Buchner funnel. Subsequently, the funnel was left to stand for 4 hours inside a thermostatic chamber at 110°C to evaporate the ethanol, and the thus obtained solid portion was collected.

### «Conditions 3»

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 15 g of a waste white clay that had been obtained in the decolorizing step for a deacidified soybean oil (Galleon Earth (product name), manufactured by Mizusawa Industrial Chemicals, Ltd., that had been used in the decolorizing step), 135 g of 95% ethanol and 4.5 g of sulfuric acid were added to the flask.

A Dimroth condenser was connected to the flask, stirring was performed with the flask placed in an oil bath set to a temperature of 85°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and the reaction time was set to 1 hour.

Following completion of the reaction, the solid portion and the liquid portion were separated using a Buchner funnel. During the separation, ethanol (approximately 30 mL) was used to wash the inside of the four-necked flask and the perforated plate of the Buchner funnel, and the washing was continued until the liquid portion draining from the solid portion was transparent. Subsequently, the funnel was left to stand for 4 hours inside a thermostatic chamber at 110°C to evaporate the ethanol, and the thus obtained solid portion was collected.

### «Conditions 4»

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 25 g of a waste white clay that had been obtained in the decolorizing step for a deacidified soybean oil (Galleon Earth (product name), manufactured by Mizusawa Industrial Chemicals, Ltd., that had been used in the decolorizing step), 125 g of 95% ethanol and 0.15 g of sulfuric acid were added to the flask.

A Dimroth condenser was connected to the flask, stirring was performed with the flask placed in an oil bath set to a temperature of 85°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, the solid portion and the liquid portion were separated using a Buchner funnel. During the separation, ethanol (approximately 30 mL) was used to wash the inside of the four-necked flask and the perforated plate of the Buchner funnel. Subsequently, the funnel was left to stand for 4 hours inside a thermostatic chamber at 110°C to evaporate the ethanol, and the thus obtained solid portion was collected.

### «Conditions 5»

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 25 g of a waste white clay that had been obtained in the decolorizing step for a deacidified soybean oil (Galleon Earth (product name), manufactured by Mizusawa Industrial Chemicals, Ltd., that had been used in the decolorizing step), 125 g of 50% ethanol and 4.5 g of sulfuric acid were added to the flask.

A Dimroth condenser was connected to the flask, stirring was performed with the flask placed in an oil bath set to a temperature of 85°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, the solid portion and the liquid portion were separated using a Buchner funnel. During the separation, ethanol (approximately 50 mL) was used to wash the inside of the four-necked flask and the perforated plate of the Buchner funnel. Subsequently, the funnel was left to stand for 4 hours inside a thermostatic chamber at 110°C to evaporate the ethanol, and the thus obtained solid portion was collected.

### «Conditions 6»

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 50 g of a waste white clay that had been obtained in the decolorizing step for a deacidified soybean oil (Galleon Earth (product name), manufactured by Mizusawa Industrial Chemicals, Ltd., that had been used in the decolorizing step), 100 g of 95% ethanol and 12.0 g of p-toluenesulfonic acid (PTS) were added to the flask.

A Dimroth condenser was connected to the flask, stirring was performed with the flask placed in an oil bath set to a temperature of 85°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, the solid portion and the liquid portion were separated using a Buchner funnel. During the separation, ethanol (approximately 70 mL) was used to wash the inside of the four-necked flask and the perforated plate of the Buchner funnel. Subsequently, the funnel was left to stand for 4 hours inside a thermostatic chamber at 110°C to evaporate the ethanol, and the thus obtained solid portion was collected.

### «Conditions 7»

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 50 g of a waste white clay that had been obtained in the decolorizing step for a deacidified rapeseed oil (Galleon Earth (product name), manufactured by Mizusawa Industrial Chemicals, Ltd., that had been used in the decolorizing step), 100 g of 95% ethanol and 4.5 g of sulfuric acid were added to the flask.

A Dimroth condenser was connected to the flask, stirring was performed with the flask placed in an oil bath set to a temperature of 85°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, the solid portion and the liquid portion were separated using a Buchner funnel. During the separation, ethanol (approximately 70 mL) was used to wash the inside of the four-necked flask and the perforated plate of the Buchner funnel. Subsequently, the funnel was left to stand for 4 hours inside a thermostatic chamber at 110°C to evaporate the ethanol, and the thus obtained solid portion was collected.

### «Comparative Conditions 1»

A four-necked flask was fitted with a stirrer, a thermometer holder and a glass cover. Subsequently, 50 g of a waste white clay that had been obtained in the decolorizing step for a deacidified soybean oil (Galleon Earth (product name), manufactured by Mizusawa Industrial Chemicals, Ltd., that had been used in the decolorizing step) and 100 g of hexane were added to the flask.

A Dimroth condenser was connected to the flask, stirring was performed with the flask placed in an oil bath set to a temperature of 85°C, and the point at which reflux of the hexane was confirmed was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, the solid portion and the liquid portion were separated using a Buchner funnel. During the separation, hexane (approximately 100 mL) was used to wash the inside of the four-necked flask and the perforated plate of the Buchner funnel. Subsequently, the funnel was left to stand for 4 hours inside a thermostatic chamber at 110°C to evaporate the hexane, and the thus obtained solid portion was collected.

### «Comparative Conditions 2»

A four-necked flask was fitted with a stirrer, a thermometer holder, and a glass cover. Subsequently, 50 g of a waste white clay that had been obtained in the decolorizing step for a deacidified soybean oil (Galleon Earth (product name), manufactured by Mizusawa Industrial Chemicals, Ltd., that had been used in the decolorizing step), 100 g of hexane and 4.5 g of sulfuric acid were added to the flask.

A Dimroth condenser was connected to the flask, stirring was performed with the flask placed in an oil bath set to a temperature of 85°C, and the point at which reflux of the hexane was confirmed was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, the solid portion and the liquid portion were separated using a Buchner funnel. During the separation, hexane (approximately 100 mL) was used to wash the inside of the four-necked flask and the perforated plate of the Buchner funnel. Subsequently, the funnel was left to stand for 4 hours inside a thermostatic chamber at 110°C to evaporate the hexane, and the thus obtained solid portion was collected.

### (Confirmation of Decolorizing Function of Reclaimed White Clays)

Using the solid portions (reclaimed white clays) obtained in the manner described above, the decolorizing function of each reclaimed white clay was investigated.

Specifically, a stirring rod, a stirrer and a thermometer holder were fitted to a four-necked flask, and 100 g of a deacidified soybean oil was added to the flask. With the soybean oil undergoing stirring with the stirrer, 1 g of the reclaimed white clay obtained in any one of Conditions 1 to 7 and Comparative Conditions 1 was added to the flask, and a decolorizing reaction was performed under reduced pressure at 105°C for 0.5 hours.

Subsequently, the oil was extracted by filtration, and a spectroscopic colorimeter SD5000 (product name, manufactured by Nippon Denshoku Industries Co., Ltd., glass cell, optical path length: 10 mm) was used to measure the L* value of the obtained oil.

In a similar manner, in terms of the color of the obtained oil, the Y value was measured using a Lovibond Tintometer Model E (product name, manufactured by The Tintometer Ltd., glass cell, optical path length: 5.25 inches).

The results of measuring the colors of the decolorized oils that had undergone decolorizing using the reclaimed white clays obtained under the various esterification reaction conditions described above, and the result of measuring the color of the deacidified soybean oil that had not been subjected to the decolorizing step are shown in Table 11. Among the L* values shown in Table 11, the value "77+" indicates a color with a lightness value exceeding the measurement limit (77) of the measuring device that was used.

**[Table 11]**

| Table 11 | Amount added | | | | Measurement results | |
|---|---|---|---|---|---|---|
| | Waste white clay | Ethanol | Sulfuric acid | Reaction time | L* | Y |
| Conditions 1 | 50.0 | 95% 100.0 | 4.5 | 5 | 98.80 | 12 |
| Conditions 2 | 25.0 | 99.5% 125.0 | 4.5 | 4 | 97.44 | 31 |
| Conditions 3 | 15.0 | 95% 135.0 | 4.5 | 1 | 98.52 | 17 |
| Conditions 4 | 25.0 | 95% 125.0 | 0.15 | 5 | 97.49 | 30 |
| Conditions 5 | 25.0 | 50% 125.0 | 4.5 | 7 | 96.80 | 33 |
| Conditions 6 | 50.0 | 95% 100.0 | PTS 12.0 | 5 | 98.50 | 17 |
| Conditions 7 | 50.0 | 95% 100.0 | 4.5 | 5 | 98.21 | 19 |
| Comparative conditions 1 | 50.0 | Hexane 100.0 | - | 5 | 91.05 | 62 |
| Comparative conditions 2 | 50.0 | Hexane 100.0 | 4.5 | 5 | 90.46 | 77+ |
| Unused white clay | - | - | - | - | 98.77 | 12 |
| Untreated waste white clay | - | - | - | - | 94.50 | 55 |
| Deacidified oil before decolorizing | - | - | - | 5 | 88.65 | 77 |

For each of the deacidified oils that had been decolorized using the reclaimed white clays treated under Conditions 1 to 7, it was confirmed that the L* value was higher and the Y value was lower than the corresponding values for the deacidified oil that was decolorized using an untreated waste white clay. In the case of the deacidified oil that was decolorized using a waste white clay that had undergone extraction of the oil fraction using hexane in the absence of sulfuric acid (Comparative Conditions 1), it was confirmed that although the L* value was higher and the Y value was lower than the corresponding values for the deacidified oil prior to decolorizing, the L* value was lower and the Y value was higher than the values for the oil that was decolorized using the untreated waste white clay. In the case of the deacidified oil that was decolorized using a waste white clay that had undergone extraction of the oil fraction using hexane in the presence of sulfuric acid (Comparative Conditions 2), it was found that although the L* value was higher than that of the deacidified oil prior to decolorizing, the Y value was actually higher, indicating that almost no reclamation of the decolorizing function of the waste white clay was achieved under Comparative Conditions 2.

### [Reference Example 6]

The purity of the ethanol and the reaction time used for the waste white clay were varied, and the effects on the composition of the oil or fat, the washing, and the decolorizing function of the obtained reclaimed white clay were investigated.

With the exceptions of using the amounts of the waste white clay, ethanol and sulfuric acid shown in Table 12, and performing the reflux reaction (esterification reaction) for the reaction time shown in Table 12, reaction was performed in the same manner as that described above for Conditions 1 of Reference Example 5, while samples were removed for gas chromatography, and the weights of the resulting solid portion and liquid portion were then measured.

**[Table 12]**

| Table 12 | Amount added | | | | Measurement results | |
|---|---|---|---|---|---|---|
| | Waste white clay | Ethanol | Sulfuric acid | Reaction time | L* | Y |
| Conditions 1 | 50.0 | 99.5% 100.0 | 4.5 | 4 | 98.72 | 12 |
| Conditions 2 | 50.0 | 95% 100.0 | 4.5 | 4 | 98.47 | 14 |
| Conditions 3 | 50.0 | 95% 100.0 | 4.5 | 5 | 98.73 | 12 |
| Conditions 4 | 50.0 | 95% 100.0 | 3.0 | 6 | 98.47 | 14 |
| Conditions 5 | 50.0 | 95% 100.0 | 7.5 | 4 | 98.72 | 12 |
| Unused white clay | - | - | - | - | 98.77 | 12 |
| Untreated waste white clay | - | - | - | - | 94.50 | 55 |
| Deacidified oil before decolorizing | - | - | - | - | 88.65 | 77 |

The peaks obtained by gas chromatography were classified into fatty acid ethyl esters (FAEE), free fatty acids (FA), monoglycerides (MG), diglycerides (DG) and triglycerides (TG), and the compositional ratio of each category was calculated from the ratio of the peak surface area relative to the total peak surface area. The results of these calculations are shown in Table 13 to Table 17.

**[Table 13]**

| Conditions 1 | after 1 hour | after 2 hours | after 3 hours | after 4 hours |
|---|---|---|---|---|
| FAEE | 75.8 | 91.0 | 96.0 | 96.8 |
| FA | 1.5 | 1.5 | 1.4 | 1.4 |
| MG | 4.1 | 2.3 | 1.1 | 0.7 |
| DG | 9.1 | 3.4 | 1.3 | 1.1 |
| TG | 9.5 | 1.9 | 0.3 | 0.0 |
| Total | 100 | 100 | 100 | 100 |

**[Table 14]**

| Conditions 2 | after 1 hour | after 2 hours | after 3 hours | after 4 hours |
|---|---|---|---|---|
| FAEE | 66.0 | 82.4 | 90.0 | 92.6 |
| FA | 3.6 | 3.9 | 3.9 | 3.9 |
| MG | 5.4 | 4.5 | 2.6 | 1.6 |
| DG | 11.3 | 5.5 | 2.7 | 1.6 |
| TG | 13.7 | 3.8 | 0.8 | 0.2 |
| Total | 100 | 100 | 100 | 100 |

**[Table 15]**

| Conditions 3 | after 1 hour | after 2 hours | after 3 hours | after 4 hours | after 5 hours |
|---|---|---|---|---|---|
| FAEE | 55.6 | 79.0 | 88.7 | 92.2 | 94.1 |
| FA | 3.1 | 3.7 | 3.8 | 3.8 | 3.8 |
| MG | 2.3 | 2.4 | 1.5 | 0.9 | 0.5 |
| DG | 14.5 | 8.6 | 4.2 | 2.6 | 1.6 |
| TG | 24.5 | 6.2 | 1.8 | 0.5 | 0 |
| Total | 100 | 100 | 100 | 100 | 100 |

**[Table 16]**

| Conditions 4 | after 1 hour | after 2 hours | after 3 hours | after 4 hours | after 5 hours | after 6 hours |
|---|---|---|---|---|---|---|
| FAEE | 35.7 | 54.2 | 70.8 | 79.2 | 85.7 | 89.6 |
| FA | 2.3 | 3.2 | 3.8 | 3.9 | 4.0 | 4.0 |
| MG | 3.7 | 5.4 | 5.5 | 4.7 | 3.5 | 2.5 |
| DG | 15.6 | 14.9 | 10.0 | 6.7 | 4.2 | 2.6 |
| TG | 42.7 | 22.4 | 10.0 | 5.5 | 2.6 | 1.3 |
| Total | 100 | 100 | 100 | 100 | 100 | 100 |

**[Table 17]**

| Conditions 5 | after 1 hour | after 2 hours | after 3 hours | after 4 hours |
|---|---|---|---|---|
| FAEE | 63.2 | 86.3 | 93.2 | 94.3 |
| FA | 3.1 | 3.9 | 4.0 | 3.9 |
| MG | 3.9 | 2.5 | 0.9 | 0.6 |
| DG | 9.0 | 3.9 | 1.7 | 1.2 |
| TG | 20.8 | 2.8 | 0.2 | 0.0 |
| Total | 100 | 100 | 100 | 100 |

Under all of Conditions 1 to 5, the proportion of fatty acid ethyl esters (FAEE) increased with increasing reaction time. Further, based on the results for Conditions 2 to 5, provided the remaining conditions were the same, increasing the blend proportion of the acidic catalyst tended to yield a more rapid production of the fatty acid ethyl esters, and in terms of the proportion of free fatty acids (FA), it was confirmed that no great difference was observed if the purity of the ethanol was the same.

### (Confirmation of Decolorizing Function of Reclaimed White Clay)

Using the solid portions (reclaimed white clays) obtained in the manner described above, the decolorizing function of each reclaimed white clay was investigated in the same manner as that described for Reference Example 5. The results of measuring the colors of the decolorized oils that had undergone decolorizing using the reclaimed white clays obtained under the various esterification reaction conditions described above, and the result of measuring the color of the deacidified soybean oil that had not been subjected to the decolorizing step are shown in Table 12. The deacidified oils that had undergone decolorizing using the reclaimed white clays treated under Conditions 1 to 5 each had an L* value and a Y value that were substantially the same as the values for a deacidified oil that had been decolorized using an unused white clay.

### [Reference Example 7]

The effect of performing additional washing of the reclaimed white clay with water after the esterification reaction was investigated.

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 50 g of a waste white clay that had been obtained in the decolorizing step for a deacidified soybean oil (Galleon Earth (product name), manufactured by Mizusawa Industrial Chemicals, Ltd., that had been used in the decolorizing step), 100 g of 95% ethanol and 4.5 g of sulfuric acid were added to the flask.

A Dimroth condenser was connected to the flask, stirring was performed with the flask placed in an oil bath set to a temperature of 85°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and a gas chromatography sample was removed from the flask every hour after the start of the reaction. The reaction time was set to 5 hours.

Following completion of the reaction, the reaction mixture was separated into a solid portion and a liquid portion using a Buchner funnel. During the separation, ethanol (approximately 70 mL) was used to wash the inside of the four-necked flask and the perforated plate of the Buchner funnel.

Subsequently, the solid portion was scraped into a stainless steel flask with a capacity of 500 mL, water (100 g) was added, and the solid portion was washed under stirring for 10 minutes. Besides the sample in which this water washing operation was performed once, additional samples were subjected to this water washing operation twice or three times for further comparison.

Following completion of the washing under stirring, the solid portion and the liquid portion were separated using a Buchner funnel, the funnel was left to stand for 8 hours inside a thermostatic chamber at 110°C to evaporate the residual liquid portion composed mainly of water, and the thus obtained solid portion was collected.

Using the thus obtained solid portions (reclaimed white clays), the decolorizing function of each reclaimed white clay was investigated in the same manner as that described for Reference Example 5. The reaction conditions, the color measurement results for the decolorized oils subjected to decolorizing using the obtained reclaimed white clays, and the color measurement results for a deacidified soybean oil that was not subjected to the decolorizing step are shown in Table 18. It was confirmed that even when the water washing operation was performed, there was no significant reduction in the decolorizing function.

**[Table 18]**

| Table 18 | Amount added | | | | Measurement results | |
|---|---|---|---|---|---|---|
| | Waste white clay | Ethanol | Sulfuric acid | Reaction time | L* | Y |
| Water washing once | 50.0 | 95% 100.0 | 4.5 | 5 | 98.73 | 12 |
| Water washing twice | 50.0 | 95% 100.0 | 4.5 | 5 | 98.74 | 12 |
| Water washing three times | 50.0 | 95% 100.0 | 4.5 | 5 | 98.72 | 12 |
| Unused white clay | - | - | - | - | 98.77 | 12 |
| Untreated waste white clay | - | - | - | - | 94.50 | 55 |
| Deacidified oil before decolorizing | - | - | - | - | 88.65 | 77 |

### [Reference Example 8]

The effect of performing a neutralization treatment prior to the washing of the reclaimed white clay after the esterification reaction was investigated.

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 125 g of a waste white clay that had been obtained in the decolorizing step for a deacidified soybean oil (Galleon Earth (product name), manufactured by Mizusawa Industrial Chemicals, Ltd., that had been used in the decolorizing step), 250 g of 95% ethanol and 11.25 g of sulfuric acid (3% of the total reaction liquid) were added to the flask.

A Dimroth condenser was connected to the flask, stirring was performed with the flask placed in an oil bath set to a temperature of 85°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and a gas chromatography sample was removed from the flask every hour after the start of the reaction. The reaction time was set to 4 hours.

Following completion of the reaction, sodium hydroxide or sodium carbonate was added to the reaction liquid in an amount sufficient to provide the amount of alkali (mol%) relative to the total reaction liquid shown in Table 19, and after mixing, the resulting mixture was separated into a solid portion and a liquid portion using a Buchner funnel. During the separation, ethanol (approximately 70 mL) was used to wash the inside of the four-necked flask and the perforated plate of the Buchner funnel.

The obtained solid portion was washed by adding 95% ethanol. The amount of ethanol required for the washing was 400 mL in the case where the neutralization was performed using sodium hydroxide, and 700 mL in the case where the neutralization was performed using sodium carbonate. Brown droplets which were substantially insoluble in the ethanol were adhered to the filtrate.

Subsequently, the solid portion obtained following the ethanol washing was scraped into a stainless steel flask with a capacity of 500 mL, water (100 g) was added, and an operation in which the solid portion was washed under stirring for 10 minutes was performed either once or twice. Following completion of the washing under stirring, the solid portion and the liquid portion were separated using a Buchner funnel, the funnel was left to stand for 8 hours inside a thermostatic chamber at 110°C to evaporate the residual liquid portion composed mainly of water, and the thus obtained solid portion was collected.

**[Table 19]**

| Amount of added alkali (mol%) | NaOH 65% | Na₂CO₃ 65% | NaOH 70% | Na₂CO₃ 70% | Na₂CO₃ 75% | Na₂CO₃ 100% |
|---|---|---|---|---|---|---|
| Water washing once | | | | | | |
| pH | 3.9 | 4.0 | 4.7 | 5.7 | 7.7 | 8.9 |
| Y value | 27 | 25 | 32 | 42 | 55 | 79 |
| Water washing twice | | | | | | |
| pH | 4.1 | 4.2 | 4.8 | 5.4 | | |
| Y value | 22 | 18 | 24 | 27 | | |

The pH of the wash liquid, and the Y value of the solid portion (reclaimed white clay) obtained following the washing were measured. The measurement results are shown in Table 19. The results revealed that by adding an alkali to the reaction liquid after the esterification reaction but before the solid-liquid separation, the pH of the discharged waste liquid could be increased comparatively, and that, in particular, by using the neutralization treatment to adjust the pH of the waste water to a value of 4 to 5, a better reclaimed white clay with a smaller Y value could be obtained.

### [Reference Example 9]

The change in the decolorizing function upon repeated reclamation was investigated.

### «Conditions 1»

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 100 g of a waste white clay that had been obtained in the decolorizing step for a deacidified soybean oil (Galleon Earth (product name), manufactured by Mizusawa Industrial Chemicals, Ltd., that had been used in the decolorizing step), 200 g of 95% ethanol and 3 g of sulfuric acid were added to the flask.

A Dimroth condenser was connected to the flask, stirring was performed with the flask placed in an oil bath set to a temperature of 80°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, the solid portion and the liquid portion were separated using a Buchner funnel. During the separation, ethanol (approximately 70 mL) was used to wash the inside of the four-necked flask and the perforated plate of the Buchner funnel.

The obtained solid portion was washed by adding 95% ethanol, stirring, and then performing a filtration. Following this washing with ethanol, the solid portion was scraped into a stainless steel flask with a capacity of 500 mL, water (100 g) was added, and the solid portion was washed under stirring for 10 minutes. Following completion of the washing under stirring, the solid portion and the liquid portion were separated using a Buchner funnel, the funnel was left to stand for 8 hours inside a thermostatic chamber at 110°C to evaporate the residual liquid portion composed mainly of water, and the thus obtained solid portion (reclaimed white clay) was collected.

The collected reclaimed white clay was used to decolorize a deacidified soybean oil in the same manner as that described in Reference Example 5, and the color of the decolorized oil was measured.

The used waste white clay was then treated as a waste white clay and once again subjected to reclamation. These reclamation and decolorizing steps were repeated 5 times.

### «Conditions 2»

A four-necked flask was fitted with a stirrer (Mighty MAGshiel MG-4 (product name), manufactured by Nakamura Scientific Instruments Industry Co., Ltd.), a thermometer holder, and a glass cover. Subsequently, 100 g of a waste white clay that had been obtained in the decolorizing step for a deacidified soybean oil (Galleon Earth (product name), manufactured by Mizusawa Industrial Chemicals, Ltd., that had been used in the decolorizing step), 200 g of 95% ethanol and 3 g of sulfuric acid were added to the flask.

A Dimroth condenser was connected to the flask, stirring was performed with the flask placed in an oil bath set to a temperature of 80°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, 65 mol% of sodium hydroxide was added to the reaction liquid, and following mixing and neutralization, the reaction mixture was separated into a solid portion and a liquid portion using a Buchner funnel. During the separation, ethanol (approximately 70 mL) was used to wash the inside of the four-necked flask and the perforated plate of the Buchner funnel.

The obtained solid portion was washed by adding 95% ethanol, stirring, and then performing a filtration. Following this washing with ethanol, the solid portion was scraped into a stainless steel flask with a capacity of 500 mL, water (100 g) was added, and the solid portion was washed under stirring for 10 minutes. Following completion of the washing under stirring, the solid portion and the liquid portion were separated using a Buchner funnel, the funnel was left to stand for 8 hours inside a thermostatic chamber at 110°C to evaporate the residual liquid portion composed mainly of water, and the thus obtained solid portion (reclaimed white clay) was collected.

The collected reclaimed white clay was used to decolorize a deacidified soybean oil in the same manner as that described in Reference Example 5, and the color of the decolorized oil was measured.

The used waste white clay was then treated as a waste white clay and once again subjected to reclamation. These reclamation and decolorizing steps were repeated 5 times.

The results of the color measurements of the decolorized oils that had been decolorized using the reclaimed white clays under Conditions 1 and Conditions 2, and the color measurement results for a deacidified soybean oil that was not subjected to a decolorizing step are shown for each reclamation repetition in Table 20 (Conditions 1) and Table 21 (Conditions 2). The results indicated that under Conditions 1 in which a neutralization reaction was not performed, there was almost no change in the decolorizing function as a result of the repeated reclamations, and even after 5 repetitions of the reclamation step, the reclaimed white clay exhibited an extremely good decolorizing function. Further, under Conditions 2 in which the neutralization reaction was performed, although a slight reduction in the decolorizing function was observed as a result of the repeated reclamations, even after 5 repetitions of the reclamation step, the reclaimed white clay exhibited a satisfactorily high decolorizing function.

**[Table 20]**

| Reclamation repetitions | 1 | 2 | 3 | 4 | 5 |
|---|---|---|---|---|---|
| L* value | 99.40 | 99.35 | 99.40 | 99.20 | 99.20 |
| Y value | 12 | 12 | 12 | 12 | 12 |
| Unused white clay L* value | 99.35 | | | | |
| Unused white clay Y value | 12 | | | | |

**[Table 21]**

| Reclamation repetitions | 1 | 2 | 3 | 4 | 5 |
|---|---|---|---|---|---|
| L* value | 99.01 | 99.02 | 99.05 | 98.18 | 98.20 |
| Y value | 17 | 17 | 17 | 24 | 24 |
| Unused white clay L* value | 99.35 | | | | |
| Unused white clay Y value | 12 | | | | |

### [Example 1]

Using the method for producing a reclaimed white clay according to the present invention, a rapeseed oil waste white clay, for which repeated reclamation has proven difficult, was reclaimed and the decolorizing function upon repeated reclamation was investigated.

### «Reference Conditions 1»

A four-necked flask was fitted with a stirrer, a thermometer holder, and a glass cover. Subsequently, 100 parts of a waste white clay that had been obtained in the decolorizing step for a deacidified rapeseed oil (Galleon Earth (product name), manufactured by Mizusawa Industrial Chemicals, Ltd., that had been used in the decolorizing step), 200 parts of 95% ethanol and 9 parts of sulfuric acid were added to the flask.

A Dimroth condenser was connected to the flask, stirring was performed with the flask placed in an oil bath set to a temperature of 85°C, and the point at which reflux of the ethanol was confirmed was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, the solid portion and the liquid portion were separated using a Buchner funnel. During the separation, ethanol (approximately 100 parts) was used to wash the inside of the four-necked flask and the perforated plate of the Buchner funnel. Subsequently, the funnel was left to stand for 4 hours inside a thermostatic chamber at 110°C to evaporate the ethanol, and the thus obtained solid portion was collected.

### «Reference Conditions 2»

With the exception of changing the amount of sulfuric acid used to 15 parts per 100 parts of the waste white clay, the same procedure as that described for Reference Conditions 1 was used to mix a waste white clay that had been obtained in the decolorizing step for a deacidified rapeseed oil with 95% ethanol and sulfuric acid, react the mixture for 5 hours under a state of reflux, subsequently separate the reaction mixture into a solid portion and a liquid portion, evaporate the ethanol from the collected solid portion, and then collect the thus obtained solid portion.

### «Conditions 1»

A rapeseed oil waste white clay was reclaimed using the method for producing a reclaimed white clay according to the first aspect of the present invention.

A four-necked flask was fitted with a stirrer, a thermometer holder, and a glass cover. Subsequently, 100 parts of a waste white clay that had been obtained in the decolorizing step for a deacidified rapeseed oil (Galleon Earth (product name), manufactured by Mizusawa Industrial Chemicals, Ltd., that had been used in the decolorizing step) and 200 parts of 95% ethanol were added to the flask.

A Dimroth condenser was connected to the flask, stirring was performed with the flask placed in an oil bath set to a temperature of 85°C, and the ethanol was brought to a state of reflux over a period of 20 minutes. Subsequently, following sampling of portions of the liquid component and the solid component, 15 parts of sulfuric acid was added, and this was deemed the reaction start time. The stirring speed was set to 300 rpm using a Three-One Motor FBL3000 (product name, manufactured by SHINTO Scientific Co., Ltd.), and the reaction time was set to 5 hours.

Following completion of the reaction, a portion of the liquid component was sampled, and then the same procedure as that described in Reference Conditions 1 was used to separate the reaction mixture into a solid portion and a liquid portion, evaporate the ethanol from the collected solid fraction, and collect the resulting solid fraction.

Further, the liquid component sampled immediately prior to the addition of the sulfuric acid, and the liquid component sampled following completion of the reaction were analyzed by gas chromatography. The results confirmed that in the liquid component sampled immediately prior to the addition of the sulfuric acid, an oily component equivalent to 50 to 60% of the amount extracted after 5 hours of reaction had already been extracted.

Moreover, in the case where the same procedure was performed with the exceptions of setting the temperature of the oil bath to 60°C and bringing the ethanol to a state of reflux over a period of 5 minutes, sampling was performed immediately prior to the addition of the sulfuric acid and then following completion of the reaction, and both samples were analyzed by gas chromatography, it was confirmed that, in a similar manner to above, in the liquid component sampled immediately prior to the addition of the sulfuric acid, an oily component equivalent to 50 to 60% of the amount extracted after 5 hours of reaction had already been extracted.

### «Conditions 2»

A rapeseed oil waste white clay was reclaimed using a method representing a combination of the method for producing a reclaimed white clay according to the first aspect of the present invention and the method for producing a reclaimed white clay according to the third aspect of the present invention.

Specifically, in the same manner as that described in Conditions 1, a mixture of a waste white clay obtained in the decolorizing step for a deacidified rapeseed oil, 95% ethanol and sulfuric acid were reacted for 5 hours under a state of reflux. Following completion of the reaction, the solid portion and the liquid portion were separated using a Buchner funnel. During the separation, 100 parts of ethanol was used to wash the inside of the four-necked flask and the perforated plate of the Buchner funnel. Subsequently, the obtained solid portion was placed in a four-necked flask fitted with a stirrer, a thermometer holder and a glass cover, and 200 parts of 95% ethanol was added to the flask.

A Dimroth condenser was connected to the flask, stirring was performed with the flask placed in an oil bath set to a temperature of 85°C, and stirring was continued for one hour from the point at which reflux of the ethanol was confirmed.

Following completion of the stirring, the solid portion and the liquid portion were separated using a Buchner funnel. During the separation, 100 parts of ethanol was used to wash the inside of the four-necked flask and the perforated plate of the Buchner funnel. Subsequently, the funnel was left to stand for 4 hours inside a thermostatic chamber at 110°C to evaporate the ethanol, and the thus obtained solid portion was collected.

### «Conditions 3»

A rapeseed oil waste white clay was reclaimed using a method representing a combination of the method for producing a reclaimed white clay according to the first aspect of the present invention and the method for producing a reclaimed white clay according to the second aspect of the present invention.

A four-necked flask was fitted with a stirrer, a thermometer holder, and a glass cover. Subsequently, 100 parts of a waste white clay that had been obtained in the decolorizing step for a deacidified rapeseed oil (Galleon Earth (product name), manufactured by Mizusawa Industrial Chemicals, Ltd., that had been used in the decolorizing step) and 200 parts of 95% ethanol were added to the flask.

A Dimroth condenser was connected to the flask, stirring was performed with the flask placed in an oil bath set to a temperature of 85°C, and the ethanol was brought to a state of reflux over a period of 20 minutes. Subsequently, 15 parts of sulfuric acid was added to the flask, and this was deemed the reaction start time. The stirring speed was set to 300 rpm using a Three-One Motor FBL3000 (product name, manufactured by SHINTO Scientific Co., Ltd.), and the reaction time was set to 5 hours.

One hour after the start of the reaction, the stirring and heating were halted temporarily, and once it was confirmed that the white clay had settled, 100 parts of the reaction liquid was extracted. Subsequently, additional 95% ethanol was added to the flask, and the reaction was continued for a further 4 hours from the point at which reflux of the ethanol was confirmed.

Following completion of the reaction, the reaction mixture was separated into a solid portion and a liquid portion using a Buchner funnel. During the separation, 100 parts of ethanol was used to wash the inside of the four-necked flask and the perforated plate of the Buchner funnel. Subsequently, the funnel was left to stand for 4 hours inside a thermostatic chamber at 110°C to evaporate the ethanol, and the thus obtained solid portion was collected.

«Comparative Conditions 1»

An extraction of the oily component from a waste white clay was performed using only hexane.

Specifically, with the exception of adding only 100 parts of the waste white clay and 200 parts of hexane to the flask instead of adding 100 parts of the waste white clay, 200 parts of 95% ethanol and 9 parts of sulfuric acid, the same procedure as Reference Conditions 1 was used to react a waste white clay that had been obtained in the decolorizing step for a deacidified rapeseed oil under a state of reflux for 5 hours, subsequently separate the solid portion and the liquid portion, evaporate the hexane from the collected solid portion, and then collect the resulting solid fraction.

### (Confirmation of Decolorizing Function of Reclaimed White Clays)

Using the solid portions (reclaimed white clays) obtained in the manner described above, the decolorizing function of each reclaimed white clay was investigated.

Specifically, a stirrer and a thermometer holder were fitted to a four-necked flask, and 100 parts of a deacidified rapeseed oil was added to the flask. With the rapeseed oil undergoing stirring with the stirrer, 1.5 parts of the reclaimed white clay obtained in any one of Reference Conditions 1 and 2, Conditions 1 to 3, and Comparative Conditions 1 was added to the flask, and a decolorizing reaction was performed under reduced pressure at 105°C for 0.5 hours.

Subsequently, the color of the oil obtained upon filtration (the deacidified oil following the decolorizing treatment) was evaluated by measuring the Y value using a Lovibond Tintometer Model E (product name, manufactured by The Tintometer Ltd., glass cell, optical path length: 5.25 inches).

Further, as a comparative test, an unused white clay (Galleon Earth (product name), manufactured by Mizusawa Industrial Chemicals, Ltd.) and a waste white clay prior to reclamation (untreated waste white clay) were also used in a decolorizing reaction under the same conditions.

### (Confirmation of Repeated Reclamation)

The reclaimed white clays used for decolorizing the rapeseed oil were collected as waste white clays, and reclamation under the respective reclamation conditions and decolorizing were repeated, with the color of the deacidified oil measured after each reclamation treatment.

Table 22 shows the measurement results for the colors of the deacidified oils obtained under each of the conditions and the comparative test, the measurement result for the color of the deacidified oil obtained from the decolorizing reaction using the unused white clay, the measurement result for the color of the deacidified oil obtained from the decolorizing reaction using the untreated waste white clay, and the measurement result for the color of the deacidified rapeseed oil that was not subjected to the decolorizing step (recorded as "deacidified oil before decolorizing" in the table).

**[Table 22]**

| Table 22 | Amount added (parts) | | | | Measurement result (Y) | | | | |
|---|---|---|---|---|---|---|---|---|---|
| | Waste white clay | Ethanol | Sulfuric acid | Reaction time | First reclamation | Second reclamation | Third reclamation | Fourth reclamation | Fifth reclamation |
| Reference Conditions 1 | 100 | 200 | 9 | 5 | 12 | 21 | 17 | 21 | 21 |
| Reference Conditions 2 | 100 | 200 | 15 | 5 | 13 | 15 | 17 | 21 | 21 |
| Conditions 1 | 100 | 200 | 15 | 5 | 12 | 13 | 14 | 13 | 15 |
| Conditions 2 | 100 | 200 | 15 | 5 | 12 | 12 | 12 | 14 | 13 |
| Conditions 3 | 100 | 200 | 15 | 5 | 10 | 11 | 13 | 14 | 14 |
| Comparative conditions 1 | 100 | Hexane 200 | - | 5 | 62 | - | - | - | - |
| Unused white clay | - | - | - | - | (12) | - | - | - | - |
| Untreated waste white clay | - | - | - | - | 55 | - | - | - | - |
| Deacidified oil before decolorizing | - | - | - | 5 | 77 | - | - | - | - |

These results revealed that the waste white clays reclaimed under Reference Conditions 1 and 2, and Conditions 1 to 3 each had a decolorizing function after the first reclamation similar to that of the unused white clay. In contrast, when the decolorizing was performed using the waste white clay that had been reclaimed under Comparative Conditions 1 (hexane extraction), although the Y value of the deacidified oil following the treatment was slightly lower than the value before the treatment, the value was higher than that observed when decolorizing was performed using the untreated waste white clay, and it was evident that there was almost no reclamation of the decolorizing function upon hexane extraction.

In the case of the waste white clays reclaimed under Reference Condition 1 and 2, even after 5 repeated reclamations, the decolorizing function was still considerably superior to that of the waste white clay following hexane treatment or the untreated waste white clay, but the Y value of the deacidified oil after the decolorizing treatment tended to increase as the number of reclamation repetitions increased, and a tendency for the decolorizing function to gradually deteriorate was observed. In contrast, when the decolorizing was performed using the waste white clays reclaimed under Conditions 1 to 3, which represent the method for producing a reclaimed white clay according to the present invention, even after four or five repeated reclamations, the reclaimed white clay had a decolorizing function substantially the same as that of the unused white clay, and the degree of deterioration in the decolorizing function upon repeated reclamations was clearly less than that observed for the cases where the waste white clays reclaimed under Reference Conditions 1 and 2 were used. In particular, the waste white clays reclaimed under Conditions 2 and 3 tended to exhibit a better retention of a superior decolorizing function than the waste white clay reclaimed under Conditions 1.

Moreover, a white clay was obtained by taking the solid component (white clay) sampled immediately prior to the addition of the sulfuric acid in Conditions 1, washing the solid component using ethanol and then performing drying, and when this white clay was used in a decolorizing reaction under the same conditions, the color of the deacidified oil following the decolorizing treatment was similar to the color following a decolorizing treatment using the untreated waste white clay. This result confirmed that although approximately 50 to 60% of the oily component had been extracted from the waste white clay prior to the addition of the sulfuric acid, the decolorizing function of the white clay had not been recovered.

### INDUSTRIAL APPLICABILITY

The method for producing a reclaimed white clay of the present invention can be used favorably in the field of oil and fat production, and is therefore extremely useful industrially.

## Claims

1. A method for producing a reclaimed white clay which reclaims a decolorizing function of a waste white clay,
the method having a pretreatment step of holding a waste white clay that has been used in refining an oil or fat, and a lower alcohol in a mixed state, and a reclamation step, wherein
the reclamation step comprises mixing an acidic catalyst into a mixture of the waste white clay and the lower alcohol obtained after the pretreatment step, and
simultaneously performing an extraction of an oily component from the waste white clay, and an esterification reaction between the lower alcohol and at least one component selected from the group consisting of oils or fats and free fatty acids within the extracted oily component.

2. The method for producing a reclaimed white clay according to Claim 1, wherein in the pretreatment step, a time for which the mixture of the waste white clay and the lower alcohol is held is at least 3 minutes but not more than 24 hours.

3. The method for producing a reclaimed white clay according Claim 1 or 2, wherein a temperature of the mixture of the waste white clay and the lower alcohol at completion of the pretreatment step is from 60 to 200°C.

4. The method for producing a reclaimed white clay according to any one of Claims 1 to 3, wherein in the reclamation step, the acidic catalyst is mixed into the mixture prepared in the pretreatment step with the lower alcohol within the mixture in a state of reflux, and the extraction of the oily component and the esterification reaction are performed with the lower alcohol in a state of reflux.

5. The method for producing a reclaimed white clay according to any one of Claims 1 to 4, wherein the reclamation step comprises performing, either once or a plurality of times, either a treatment in which a portion of a liquid component within the mixture is substituted with a lower alcohol, or a treatment in which additional lower alcohol is added to the mixture.

6. The method for producing a reclaimed white clay according to any one of Claims 1 to 5, further comprising an extraction step of mixing the reclaimed white clay, collected by a solid-liquid separation treatment from a mixture containing the reclaimed white clay obtained following the reclamation step, with a lower alcohol, and performing an additional extraction of an oily component from a resulting mixture.

7. The method for producing a reclaimed white clay according to any one of Claims 1 to 6, wherein in the pretreatment step, 50 to 900 parts by mass of the lower alcohol is mixed per 100 parts by mass of the waste white clay.

8. A method for producing a reclaimed white clay which reclaims a decolorizing function of a waste white clay, the method having a reclamation step of
mixing a waste white clay that has been used in refining an oil or fat, a lower alcohol and an acidic catalyst, and
simultaneously performing an extraction of an oily component from the waste white clay, and an esterification reaction between the lower alcohol and at least one component selected from the group consisting of oils or fats and free fatty acids within the extracted oily component, wherein
the reclamation step comprises performing, either once or a plurality of times, either a treatment in which a portion of a liquid component within the mixture is substituted with a lower alcohol, or a treatment in which additional lower alcohol is added to the mixture.

9. A method for producing a reclaimed white clay which reclaims a decolorizing function of a waste white clay, the method comprising a reclamation step and an extraction step, wherein
the reclamation step comprises mixing a waste white clay that has been used in refining an oil or fat, a lower alcohol and an acidic catalyst, and
simultaneously performing an extraction of an oily component from the waste white clay, and an esterification reaction between the lower alcohol and at least one component selected from the group consisting of oils or fats and free fatty acids within the extracted oily component, and
the extraction step comprises collecting the reclaimed white clay by a solid-liquid separation treatment from a mixture containing the reclaimed white clay obtained following the reclamation step, and
mixing the collected reclaimed white clay with a lower alcohol, and performing an additional extraction of an oily component from a resulting mixture.

10. The method for producing a reclaimed white clay according to Claim 8 or 9, wherein in the reclamation step, 50 to 900 parts by mass of the lower alcohol is mixed per 100 parts by mass of the waste white clay.

11. The method for producing a reclaimed white clay according to any one of Claims 1 to 10, wherein in the reclamation step, the extraction of the oily component and the esterification reaction are performed at a temperature of 60 to 200°C.

12. The method for producing a reclaimed white clay according to any one of Claims 1 to 11, wherein a difference between an L* value in a CIELab method of an oil or fat that has been refined using the reclaimed white clay with a reclaimed decolorizing function, and an L* value in the CIELab method of an oil or fat that has been refined using an unused white clay is not more than 2.

13. The method for producing a reclaimed white clay according to any one of Claims 1 to 11, wherein a difference between a Y value in a Lovibond colorimeter having a cell length of 5.25 inches of an oil or fat that has been refined using the reclaimed white clay with a reclaimed decolorizing function, and a Y value in the Lovibond colorimeter of an oil or fat that has been refined using an unused white clay is not more than 25.

14. The method for producing a reclaimed white clay according to any one of Claims 1 to 13, wherein as a result of the esterification reaction between the lower alcohol and at least one component selected from the group consisting of oils or fats and free fatty acids within the extracted oily component, an ester having an acid value of at least 0 but not more than 10 is obtained.

15. The method for producing a reclaimed white clay according to any one of Claims 1 to 14, wherein the acidic catalyst is an acid catalyst.

16. The method for producing a reclaimed white clay according to Claim 15, wherein the acid catalyst is sulfuric acid.

17. The method for producing a reclaimed white clay according to any one of Claims 1 to 16, wherein the lower alcohol is an alcohol having a carbon number of at least 1 but not more than 8.

18. The method for producing a reclaimed white clay according to any one of Claims 1 to 17, further comprising a step of washing the reclaimed white clay with a reclaimed decolorizing function obtained following the reclamation step or the extraction step with a solvent having an SP value which indicates a solubility parameter of 7 to 15.

19. The method for producing a reclaimed white clay according to any one of Claims 1 to 17, further comprising a step of adjusting a pH of the reclaimed white clay with a reclaimed decolorizing function obtained following the reclamation step or the extraction step to a pH value of 3 to 8, and then washing the reclaimed white clay with a solvent having an SP value which indicates a solubility parameter of 7 to 15 and a pH of 3 to 8.

20. The method for producing a reclaimed white clay according to Claim 18 or 19, wherein the washing of the reclaimed white clay is performed at 0 to 200°C.

21. The method for producing a reclaimed white clay according to Claim 19, further comprising a step of removing salts from the reclaimed white clay obtained following the washing with the solvent having an SP value which indicates the solubility parameter of 7 to 15 and a pH of 3 to 8.

22. The method for producing a reclaimed white clay according to Claim 21, wherein following the washing with the solvent having an SP value which indicates a solubility parameter of 7 to 15 and a pH of 3 to 8, the reclaimed white clay is washed with water.

23. The method for producing a reclaimed white clay according to any one of Claims 1 to 22, wherein the oil or fat is a vegetable oil.

24. The method for producing a reclaimed white clay according to Claim 23, wherein the oil or fat is rapeseed oil.

25. A method for producing an ester having an acid value of at least 0 but not more than 10 by the method for producing a reclaimed white clay according to any one of Claims 1 to 24.

26. A reclaimed white clay, produced by the method for producing a reclaimed white clay according to any one of Claims 1 to 24.

27. A method for producing a refined oil or fat, comprising a step of decolorizing the oil or fat using the reclaimed white clay according to Claim 26.
